(19) Europäisches Patentamt

European Patent Office

Office européen des brevets

(11) **EP 4 151 025 B1**

(12) **EUROPEAN PATENT SPECIFICATION**

(45) Date of publication and mention of the grant of the patent:
**04.10.2023 Bulletin 2023/40**

(21) Application number: **21727620.3**

(22) Date of filing: **12.05.2021**

(51) International Patent Classification (IPC):
**H04W 72/21** *(2023.01)*

(52) Cooperative Patent Classification (CPC):
**H04W 72/21**

(86) International application number:
**PCT/SE2021/050457**

(87) International publication number:
**WO 2021/230802 (18.11.2021 Gazette 2021/46)**

(54) **WIRELESS DEVICE AND METHOD PERFORMED THEREBY FOR HANDLING TRANSMISSION OF DATA**

DRAHTLOSE VORRICHTUNG UND DAMIT DURCHGEFÜHRTES VERFAHREN ZUR HANDHABUNG DER ÜBERTRAGUNG VON DATEN

DISPOSITIF SANS FIL ET PROCÉDÉ MIS EN OEUVRE PAR CE DERNIER POUR GÉRER LA TRANSMISSION DE DONNÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2020 US 202063025244 P**

(43) Date of publication of application:
**22.03.2023 Bulletin 2023/12**

(73) Proprietor: **Telefonaktiebolaget LM Ericsson (publ)**
**164 83 Stockholm (SE)**

(72) Inventors:
• **HÖGLUND, Andreas**
  **170 62 Solna (SE)**
• **OHLSSON, Oscar**
  **167 33 Bromma (SE)**
• **ENBUSKE, Henrik**
  **113 41 Stockholm (SE)**
• **FELTRIN, Luca**
  **171 47 Solna (SE)**
• **BERGMAN, Johan**
  **112 27 Stockholm (SE)**
• **TIRRONEN, Tuomas**
  **00950 Helsinki (FI)**
• **LIBERG, Olof**
  **122 37 Enskede (SE)**

(74) Representative: **Ericsson**
**Patent Development**
**Torshamnsgatan 21-23**
**164 80 Stockholm (SE)**

(56) References cited:
• **SAMSUNG: "Overall procedure for data transfer in inactive state", 3GPP DRAFT; R2-168051, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20161114 - 20161118 4 November 2016 (2016-11-04), XP051192344, Retrieved from the Internet: URL:http://www.3gpp.org/ftp/tsg_ran/WG2_RL 2/TSGR2_96/Docs/ [retrieved on 2016-11-04]**

**(Cont. next page)**

• "3rd Generation Partnership Project; Technical Specification Group Radio Access Network; NR; Medium Access Control (MAC) protocol specification (Release 16)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. V16.0.0 9 April 2020 (2020-04-09), pages 1-141, XP051893926, Retrieved from the Internet: URL:ftp://ftp.3gpp.org/Specs/archive/38_se ries/38.321/38321-g00.zip 38321-g00.docx [retrieved on 2020-04-09]

• "3rd Generation Partnership Project; Technical Specification Group Radio Access Network; NR; Medium Access Control (MAC) protocol specification (Release 16)", 3GPP STANDARD;

**Description**

**TECHNICAL FIELD**

The present disclosure relates to a wireless device and method performed thereby for handling transmission of data to a network node.

**BACKGROUND**

Wireless devices within a wireless communications network may be e.g., User Equipments (UE), stations (STAs), mobile terminals, wireless terminals, terminals, and/or Mobile Stations (MS). Wireless devices are enabled to communicate wirelessly in a cellular communications network or wireless communication network, sometimes also referred to as a cellular radio system, cellular system, or cellular network. The communication may be performed e.g., between two wireless devices, between a wireless device and a regular telephone and/or between a wireless device and a server via a Radio Access Network (RAN) and possibly one or more core networks, comprised within the wireless communications network. Wireless devices may further be referred to as mobile telephones, cellular telephones, laptops, or tablets with wireless capability, just to mention some further examples. The wireless devices in the present context may be, for example, portable, pocket-storable, hand-held, computer-comprised, or vehicle-mounted mobile devices, enabled to communicate voice and/or data, via the RAN, with another entity, such as another terminal or a server.

The wireless communications network covers a geographical area which may be divided into cell areas, each cell area being served by a network node, which may be an access node such as a radio network node, radio node or a base station, e.g., a Radio Base Station (RBS), which sometimes may be referred to as e.g., gNB, evolved Node B ("eNB"), "eNodeB", "NodeB", "B node", Transmission Point (TP), or BTS (Base Transceiver Station), depending on the technology and terminology used. The base stations may be of different classes such as e.g., Wide Area Base Stations, Medium Range Base Stations, Local Area Base Stations, Home Base Stations, pico base stations, etc..., based on transmission power and thereby also cell size. A cell is the geographical area where radio coverage is provided by the base station or radio node at a base station site, or radio node site, respectively. One base station, situated on the base station site, may serve one or several cells. Further, each base station may support one or several communication technologies. The base stations communicate over the air interface operating on radio frequencies with the terminals within range of the base stations. The wireless communications network may also be a non-cellular system, comprising network nodes which may serve receiving nodes, such as wireless devices, with serving beams. In 3rd Generation Partnership Project (3GPP) Long Term Evolution (LTE), base stations, which may be referred to as eNodeBs or even eNBs, may be directly connected to one or more core networks. In the context of this disclosure, the expression Downlink (DL) may be used for the transmission path from the base station to the wireless device. The expression Uplink (UL) may be used for the transmission path in the opposite direction i.e., from the wireless device to the base station.

The standardization organization 3GPP is currently in the process of specifying a New Radio Interface called NR or 5G-UTRA, as well as a Fifth Generation (5G) Packet Core Network, which may be referred to as Next Generation (NG) Core Network, abbreviated as NG-CN, NGC or 5G CN.

**Internet of Things (IoT)**

The Internet of Things (IoT) may be understood as an internetworking of communication devices, e.g., physical devices, vehicles, which may also referred to as "connected devices" and "smart devices", buildings and other items-embedded with electronics, software, sensors, actuators, and network connectivity that may enable these objects to collect and exchange data. The IoT may allow objects to be sensed and/or controlled remotely across an existing network infrastructure.

"Things," in the IoT sense, may refer to a wide variety of devices such as heart monitoring implants, biochip transponders on farm animals, electric clams in coastal waters, automobiles with built-in sensors, DNA analysis devices for environmental/food/pathogen monitoring, or field operation devices that may assist firefighters in search and rescue operations, home automation devices such as the control and automation of lighting, heating, e.g. a "smart" thermostat, ventilation, air conditioning, and appliances such as washer, dryers, ovens, refrigerators or freezers that may use telecommunications for remote monitoring. These devices may collect data with the help of various existing technologies and then autonomously flow the data between other devices.

It is expected that in a near future, the population of IoT devices will be very large. Various predictions exist, among which one assumes that there will be >60000 devices per square kilometer, and another assumes that there will be 1000000 devices per square kilometer. A large fraction of these devices is expected to be stationary, e.g., gas and electricity meters, vending machines, etc.

**Machine Type Communication (MTC)**

Machine Type Communication (MTC) has in recent years, especially in the context of the Internet of Things (IoT), shown to be a growing segment for cellular technologies. An MTC device may be a communication device, typically a wireless communication device or simply user equipment, that is, a self and/or automatically controlled unattended machine and that is typically not associated with an active human user in order to generate data traffic. An MTC device may be typically more simple, and typically associated with a more specific application or purpose, than, and in contrast to, a conventional mobile phone or smart phone. MTC involves communication in a wireless communication network to and/or from MTC devices, which communication typically may be of quite different nature and with other requirements than communication associated with e.g., conventional mobile phones and smart phones. In the context of and growth of the IoT, it is evident that MTC traffic will be increasing and may thus need to be increasingly supported in wireless communication systems.

**Small data transmission**

NR may be understood to support Radio Resource Control (RRC)_INACTIVE state, and UEs with infrequent, e.g., periodic and/or non-periodic, data transmission may be generally maintained by the network in the RRC_INACTIVE state. Until Rel-16, the RRC_INACTIVE state does not support data transmission. Hence, the UE may be understood to have to resume the connection, that is, move to RRC_CONNECTED state for any DL mobile terminated (MT) and UL mobile originated (MO) data. Connection setup and subsequently release to INACTIVE state may happen for each data transmission however small and infrequent the data packets may be. This results in unnecessary power consumption and signalling overhead.

Specific examples of small and infrequent data traffic may include the following use cases. In smartphone applications: a) traffic from Instant Messaging (IM) services, e.g., whatsapp, QQ, wechat etc, b) heart-beat/keep-alive traffic from IM/email clients and other apps, and/or c) push notifications from various applications. In non-smartphone applications: a) traffic from wearables, e.g., periodic positioning information etc, b) sensors, e.g., industrial wireless sensor networks transmitting temperature, pressure readings periodically or in an event triggered manner etc, and/or c) smart meters and smart meter networks sending periodic meter readings.

As noted in 3GPP TS 22.891, the NR system may be required to: be efficient and flexible for low throughput short data bursts, support efficient signalling mechanisms, e.g. signalling may be less than payload, and/or reduce signalling overhead in general.

Signalling overhead from INACTIVE state UEs for small data packets is a general problem and will become a critical issue with more UEs in NR, not only for network performance and efficiency, but also for the UE battery performance. In general, any device that has intermittent small data packets in INACTIVE state may benefit from enabling small data transmission in INACTIVE.

The key enablers for small data transmission in NR, namely the INACTIVE state, 2-step, 4-step Random Access Channel (RACH) and configured grant type-1 have already been specified as part of Rel-15 and Rel-16.

A new Work Item (WI), RP-193252 'New Work Item on NR small data transmissions in INACTIVE state', has been approved in 3GPP with the focus of optimizing the transmission for small data payloads by reducing the signaling overhead. The WI contains the following objectives:

---

This work item enables small data transmission in RRC_INACTIVE state as follows:
- For the RRC INACTIVE state:
  ◦ UL small data transmissions for RACH-based schemes (i.e. 2-step and 4-step RACH):
    ▪ General procedure to enable User Plane (UP)data transmission for small data packets from INACTIVE state (e.g. using MSGA or MSG3) [RAN2]
    ▪ Enable flexible payload sizes larger than the Rel-16 Common Control Channel (CCCH message size that is possible currently for INACTIVE state for MSGA and MSG3 to support UP data transmission in UL (actual payload size can be up to network configuration) [RAN2]
    ▪ Context fetch and data forwarding (with and without anchor relocation) in INACTIVE state for RACH-based solutions [RAN2, RAN3]
    Note 1: The security aspects of the above solutions should be checked with SA3
  ◦ Transmission of UL data on pre-configured Physical Uplink Shared Channel (PUSCH) resources (i.e. reusing the configured grant type 1) - when Time Alignment (TA) is valid

---

(continued)

| This work item enables small data transmission in RRC_INACTIVE state as follows: |
| --- |
| ▪ General procedure for small data transmission over configured grant type 1 resources from INACTIVE state [RAN2]<br>▪ Configuration of the configured grant type 1 resources for small data transmission in UL for INACTIVE state [RAN2] |

For Narrow Band IoT (NB-IoT) and LTE-M, similar signaling optimizations for small data have been introduced through Rel-15 Early Data Transmission (EDT) and Rel-16 Preconfigured Uplink Resources (PUR). Somewhat similar solutions may be expected for NR with the difference that the Rel-17 NR Small Data is only to be supported for RRC INACTIVE state, includes also 2-step RACH based small data, and that it may need to also include regular complexity Mobile BroadBand (MBB) UEs. Both support mobile originated (MO) traffic only.

In spite of its benefits, existing methods to perform Small Data transmissions may, under some circumstances provide worse performance than legacy procedures, resulting in unnecessary signalling, inefficient usage of resources, or requiring to initiate a new Random Access procedure from start.

R2-168051 describes procedure for data transfer in inactive state, wherein a UE with a Medium Access Control (MAC) buffer size larger than a preconfigured MSG3 threshold can be allowed by a gNB to perform continuous UL transmission in RRC inactive state based on buffer status information in MSG3.

SUMMARY

As part of the development of embodiments herein, one or more challenges with the existing technology will first be identified and discussed.

The benefit of Small Data and EDT solutions may be understood to be very dependent on the gNB knowing the size the of UE payload to be transmitted. If the UE buffer status is not accurately known, such small data optimizations may in fact provide worse performance than the legacy procedure. First, if a much too large UL grant is provided it may have to be filled out with padding bits, which is inefficient. Second, if the UE buffer status is unknown to the gNB, it may not know whether it should move to UE to RRC CONNECTED state after Msg3 transmission or not. An incorrect decision may cause more overhead signaling than would be required for the legacy procedure. For example, if the UE is released to INACTIVE after Msg3 transmission but it has more data to transmit, it may have to initiate a new Random Access procedure from start, or if a UE with no more data to transmit is moved to RRC CONNECTED, there may be unnecessary signaling from releasing the connection.

In addition, using the Small Data solution also for larger payloads may be seen as a possible disadvantage, e.g. possible deprivation of Small Data resources for the UEs that they were intended for. In general, there may still be advantages for UEs with moderately small payloads to start the data transmission early by using the Small Data feature. That is, latency and signaling overhead may still be reduced even though the full payload may not be transmitted in one transmission, e.g., in one transport block (TB). However, for larger payload sizes this benefit may be understood to be negligible, and the data transmission may even be more efficient after connection setup/resumption when a UE dedicated configuration for the data transmission may be applied. A control mechanism of when the Small Data feature may be used depending on the payload size in this manner is missing.

It is an object of embodiments herein to improve the handling of transmission of data to a network node. Particularly, it may be understood to be an object of embodiments herein to improve the handling transmission of data to a network node in a wireless communications The invention is defined by the appended claims.

As defined by claim 1, the invention provides a method performed by a wireless device, the method being for handling transmission of data to a network node, the wireless device and the network node operating in the wireless communications network, the method comprising: sending an indication to the network node, the indication comprising a value selected from a set of values, the selected value corresponding to a size of a buffer of the wireless device detected or expected to be had during an inactive state at a time of one or more transmissions, wherein the sending of the indication is performed with the proviso that the size of the buffer is smaller than a threshold, receiving an uplink grant from the network node, based on the sent indication, and sending first data to the network node during the inactive state of the wireless device, wherein the first data is user plane data, wherein the sending of the first data is performed according to the uplink grant received from the network node, and wherein the sending of the first data is performed with the proviso that the size of the buffer of the wireless device is smaller than the threshold, the buffer being a buffer for transmission, wherein the sending of the indication is performed prior to the sending of one or more data packets comprising at least a part of the first data.

Preferred embodiments of the method of claim 1 are defined by claims 2 to 11.

As defined by claim 12, the invention provides a wireless device, for handling transmission of data to a network node, the wireless device and the network node being configured to operate in a wireless communications network, the wireless device being further configured to: send an indication to the network node, the indication being configured to comprise a value configured to be selected from a set of values, the selected value being configured to correspond to a size of a buffer of the wireless device configured to be detected or expected to be had during an inactive state at a time of one or more transmissions, wherein the sending of the indication is configured to be performed with the proviso that the size of the buffer is smaller than a threshold, receive an uplink grant from the network node, based on the indication configured to be sent, and- send first data to the network node during the inactive state of the wireless device, wherein the first data is configured to be user plane data, wherein the sending of the first data is configured to be performed according to the uplink grant configured to be received from the network node, and wherein the sending of the first data is configured to be performed with the proviso that the size of the buffer of the wireless device is smaller than the threshold, the buffer being configured to be a buffer for transmission, wherein the sending of the indication is configured to be performed prior to the sending of one or more data packets comprising at least a part of the first data.

Preferred embodiments of the wireless device of claim 12 are defined by claims 13 to 22.

By sending the indication, the wireless device may enable the network node to know the amount of data the wireless device may still have to transmit, so that the network node may evaluate whether the transmission is small enough to be still allowed as an additional transmission in inactive state, or if it may be more efficient for the wireless device to transmit the remaining data in connected state. Furthermore, by reporting the buffer size, the wireless device may enable the network node to send back an UL grant tailored to the size the wireless device may need, in order to may avoid that the UL grant sent by the network node may need to be filled out with padding bits for being too large, which would be a waste of resources.

By the uplink grant received from the network node being based on the indication, the wireless device may enable the network node to enforce the control mechanism of when the Small Data feature may be used depending on the payload size, so that this feature is advantageously used in the wireless communications network but not abused.

By then sending the first data using the UL grant sent by the network node, the wireless device may furthermore be enabled to avoid having to initiate a new Random Access procedure from start. Hence, overhead signaling may be enabled to be decreased or minimized in comparison with that that would be required for the legacy procedure. Accordingly, a control mechanism for when the Small Data feature may be used depending on the payload size may be enabled, which may ensure this feature is advantageously used in the wireless communications network but not abused, by for example, wireless devices having too much data.

## BRIEF DESCRIPTION OF THE DRAWINGS

Examples of embodiments herein are described in more detail with reference to the accompanying drawings, according to the following description.

Figure 1    is a schematic diagram an example of a wireless communications network, according to embodiments herein.

Figure 2    is a flowchart depicting a method in a wireless device, according to embodiments herein.

Figure 3    is a flowchart depicting a method in a network node, according to embodiments herein.

Figure 4    is a schematic diagram illustrating a non-limiting example of a Short Small Data BSR Medium Access Control (MAC) Control Element (CE), according to embodiments herein.

Figure 5    is a schematic diagram illustrating another non-limiting example of a MAC header that may be used according to embodiments herein.

Figure 6    is a schematic diagram illustrating another non-limiting example of a MAC header that may be used according to embodiments herein.

Figure 7    is a schematic block diagram illustrating two embodiments, in panel a) and panel b), of a wireless device, according to embodiments herein.

Figure 8    is a schematic block diagram illustrating two embodiments, in panel a) and panel b), of a network node, according to embodiments herein.

Figure 9    is a schematic block diagram illustrating a telecommunication network connected via an intermediate network to a host computer, according to embodiments herein.

Figure 10   is a generalized block diagram of a host computer communicating via a base station with a user equipment over a partially wireless connection, according to embodiments herein.

Figure 11   is a flowchart depicting embodiments of a method in a communications system including a host computer, a base station and a user equipment, according to embodiments herein.

Figure 12   is a flowchart depicting embodiments of a method in a communications system including a host computer, a base station and a user equipment, according to embodiments herein.

Figure 13      is a flowchart depicting embodiments of a method in a communications system including a host computer, a base station and a user equipment, according to embodiments herein.

Figure 14      is a flowchart depicting embodiments of a method in a communications system including a host computer, a base station and a user equipment, according to embodiments herein.

DETAILED DESCRIPTION

Certain aspects of the present disclosure and their embodiments may provide solutions to these or other challenges. Embodiments herein may be generally understood to relate to different aspects of providing a Small Data Buffer Status Report. Embodiments herein may be understood to cover new Buffer Status Report (BSR) formats for Small Data, which may limit the maximum buffer size for which the Small Data feature may not, or may need to, be used by UEs. That is, implicitly controlling how much additional data the UE may have, e.g., on top of what may fit in the initial Small Data transmission, and still be allowed to use the Small Data feature. Optionally, the BSR format may be configured UE-specifically, e.g., via dedicated RRC signaling, e.g. as part of the Small Data configuration.

In some embodiments, a data payload threshold, or buffer size limit, may be configured as part of the Small Data configuration, possibly UE-specifically, and only UEs with a payload not exceeding this threshold may be allowed to use the Small Data feature.

Some of the embodiments contemplated will now be described more fully hereinafter with reference to the accompanying drawings, in which examples are shown. In this section, the embodiments herein will be illustrated in more detail by a number of exemplary embodiments. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art. It should be noted that the exemplary embodiments herein are not mutually exclusive. Components from one embodiment may be tacitly assumed to be present in another embodiment and it will be obvious to a person skilled in the art how those components may be used in the other exemplary embodiments.

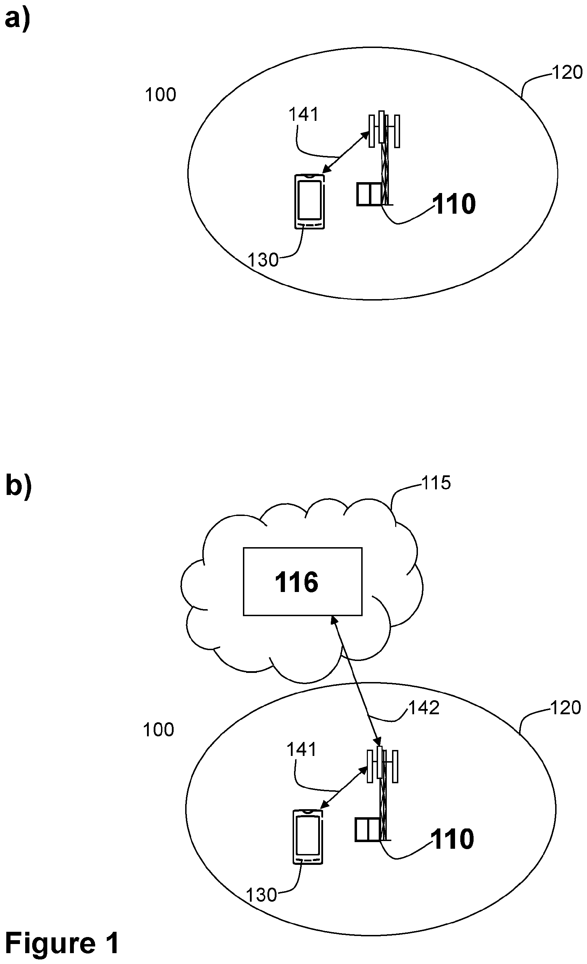

**Figure 1** depicts two non-limiting examples of a wireless network or **wireless communications network 100,** sometimes also referred to as a wireless communications system, cellular radio system, or cellular network, in which embodiments herein may be implemented. The wireless communications network 100 may typically support MTC, eMTC, IoT and/or NB-IoT. The wireless communications network 100 may be a 5G system, 5G network, or Next Gen System or network. In other examples, the wireless communications network 100 may instead, or in addition, support other technologies such as, for example, Long-Term Evolution (LTE), e.g. LTE-M, LTE Frequency Division Duplex (FDD), LTE Time Division Duplex (TDD), LTE Half-Duplex Frequency Division Duplex (HD-FDD), LTE operating in an unlicensed band, such as LTE LAA, eLAA, feLAA and/or MulteFire. Yet in other examples, the wireless communications network 100 may support other technologies such as, for example Wideband Code Division Multiple Access (WCDMA), Universal Terrestrial Radio Access (UTRA) TDD, Global System for Mobile communications (GSM) network, GSM/Enhanced Data Rates for GSM Evolution (EDGE) Radio Access Network (GERAN) network, Ultra-Mobile Broadband (UMB), EDGE network, network comprising of any combination of Radio Access Technologies (RATs) such as e.g. Multi-Standard Radio (MSR) base stations, multi-RAT base stations etc., any 3rd Generation Partnership Project (3GPP) cellular network, WiFi networks, Worldwide Interoperability for Microwave Access (WiMax), or any cellular network or system, such as for example a system younger than 5G, with similar functionality to that enabling to implement the embodiments herein. Thus, although terminology from 5G/NR and LTE may be used in this disclosure to exemplify embodiments herein, this should not be seen as limiting the scope of the embodiments herein to only the aforementioned system.

The wireless communications network 100 may comprise a plurality of network nodes, whereof a **network node 110** is depicted in the non-limiting example of Figure 1. The network node 110 is a radio network node. That is, a transmission point such as a radio base station, for example a gNB, an eNB, an eNodeB, or a Home Node B, a Home eNode B, or any other network node with similar features capable of serving a user equipment, such as a wireless device or a machine type communication device, in the wireless communications network 100. In some examples, such as that depicted in Figure 1 b, the network node 110 may be a distributed node, and may partially perform its functions in collaboration with a **virtual node 116** in a **cloud 115.**

The wireless communications network 100 may cover a geographical area, which in some embodiments may be divided into cell areas, wherein each cell area may be served by a radio network node, although, one radio network node may serve one or several cells. In the example of Figure 1, the network node 110 serves a **cell 120.** The network node 110 may be of different classes, such as, e.g., macro eNodeB, home eNodeB or pico base station, based on transmission power and thereby also cell size. In some examples, the network node 110 may serve receiving nodes with serving beams. The radio network node may support one or several communication technologies, and its name may depend on the technology and terminology used. Any of the radio network nodes that may be comprised in the communications network 100 may be directly connected to one or more core networks.

A plurality of wireless devices may be located in the wireless communication network 100, whereof a **wireless**

**device 130,** is depicted in the non-limiting example of Figure 1. The wireless device 130 comprised in the wireless communications network 100 may be a wireless communication device such as a 5G UE, or a UE, which may also be known as e.g., mobile terminal, wireless terminal and/or mobile station, a mobile telephone, cellular telephone, or laptop with wireless capability, just to mention some further examples. Any of the wireless devices comprised in the wireless communications network 100 may be, for example, portable, pocket-storable, hand-held, computer-comprised, or a vehicle-mounted mobile device, enabled to communicate voice and/or data, via the RAN, with another entity, such as a server, a laptop, a Personal Digital Assistant (PDA), or a tablet, Machine-to-Machine (M2M) device, a sensor, IoT device, NB-IoT device, device equipped with a wireless interface, such as a printer or a file storage device, modem, or any other radio network unit capable of communicating over a radio link in a communications system. The wireless device 130 comprised in the wireless communications network 100 may be enabled to communicate wirelessly in the wireless communications network 100. The communication may be performed e.g., via a RAN, and possibly the one or more core networks, which may comprised within the wireless communications network 100. In some examples, the wireless device 130 may be a Rel-17 RedCap device.

The wireless device 130 may be configured to communicate within the wireless communications network 100 with the network node 110 over a **first link 141,** e.g., a radio link. The network node 110 may be configured to communicate within the wireless communications network 100 with the virtual network node 116 over a **second link 142,** e.g., a radio link or a wired link.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

In general, the usage of "first" and/or "second" herein may be understood to be an arbitrary way to denote different elements or entities, and may be understood to not confer a cumulative or chronological character to the nouns they modify, unless otherwise noted, based on context.

Several embodiments are comprised herein. It should be noted that the examples herein are not mutually exclusive. Components from one embodiment may be tacitly assumed to be present in another embodiment and it will be obvious to a person skilled in the art how those components may be used in the other exemplary embodiments.

More specifically, the following are embodiments related to a wireless device, such as the wireless device 130, e.g., a 5G UE or a UE, and embodiments related to a network node, such as the network node 110, e.g., a gNB or an eNB.

Some embodiments herein will now be further described with some non-limiting examples.

In the following description, any reference to a/the UE, or simply "UE" may be understood to equally refer the wireless device 130; any reference to a/the gNB, a/the NW and/or a/the network may be understood to equally refer to the network node 110.

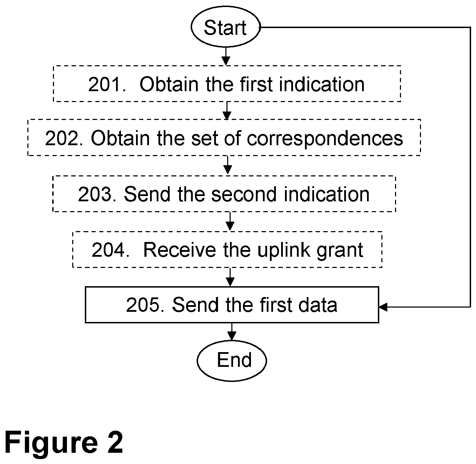

Embodiments of a method, performed by the wireless device 130, will now be described with reference to the flowchart depicted in Figure 2. The method may be understood to be for handling transmission of data to the network node 110. The wireless device 130 and the network node 110 operate in the wireless communications network 100.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

The method may be understood to be a computer-implemented method.

In some examples, data may be "Small Data".

Several embodiments are comprised herein. In some embodiments all the actions may be performed. In some embodiments, one or more actions may be performed. It should be noted that the examples herein are not mutually exclusive. One or more embodiments may be combined, where applicable. All possible combinations are not described to simplify the description. Components from one embodiment may be tacitly assumed to be present in another embodiment and it will be obvious to a person skilled in the art how those components may be used in the other exemplary embodiments. A non-limiting example of the method performed by the wireless device 130 is depicted Figure 2.

In Figure 2, optional actions are represented with dashed boxes.

**Action 201**

In the course of communications in the wireless communications network 100, the wireless device 130 may need to transmit a small amount of data to the network node 110. In other words, the wireless device 130 may need to transmit Small Data to the network node 110. If the wireless device 130 is in inactive state, it may not be worth for the wireless device 130 to go into connected state in order to transmit the Small Data to the network node 110. The amount of data to transmit may be larger than that that would fit into an allowed transmission of user plane data to the network node 110 in inactive state, yet it may be still small enough to make it not worth for the wireless device 130 to try to go into connected state for the transmission of the remainder data. However, as explained in the Summary section, how much data the wireless device 130 is allowed to transmit without going into connected state may need to be controlled to ensure the beneficial use of the Small Data feature.

In order to control how much additional data the wireless device 130 may have, e.g., on top of what may have fitted in an initial Small Data transmission and still be allowed to use the Small Data feature, a data payload threshold, or buffer size limit, may be configured as part of the Small Data configuration, possibly UE-specifically, so that only UEs with a payload not exceeding this threshold may be allowed to use the Small Data feature. According to the foregoing, in this Action 201, the wireless device 130 may obtain a first indication from the network node 110. The first indication may indicate a threshold. The threshold may be as described next.

*Payload size threshold*

If it is to be ensured that the Small Data feature is not misused by UEs having relatively much data to transmit, and upper limit on the buffer size, or a payload size threshold, may be configured as part of the Small Data configuration. Only UEs with a buffer size smaller than indicated by this configured upper limit may be allowed to use the Small Data feature.

The BS limit/threshold may be configured as an absolute number, or as an integer N, in which case N*TBS_max may give the BS limit/threshold, where TBS_max may be understood to be the max TBS supported by the wireless device 130, which may vary depending on the UE type. In either case, the BS limit/threshold may be UE specifically configured and different values provided to different UEs.

In some examples, the threshold may be a maximum size of the buffer ($BS_{max}$), e.g., a maximum transmit buffer size.

Obtaining in this Action 201 may comprise, in some examples, retrieving from a memory.

In other examples, the obtaining in this Action 201 may be performed by receiving the first indication from the network node 110, e.g., via the first link 141.

In some examples, the threshold may be preconfigured in the wireless device 130.

By receiving the first indication in this Action 201, the wireless device 130 may be enabled not only determine if it may be allowed to try to transmit the data it may have in inactive state, but also, it may be enabled to determine a format for providing a BSR to the network node 110 indicating the amount of data it may want to transmit. That is, the wireless device 130 also be enabled to determine a set of correspondences between a set of values and a set of buffer sizes, as described in the next Action.

**Action 202**

In the context of embodiments herein, the wireless device 130 may make an initial transmission of data to the network node 110 in inactive state. However, the wireless device 130 may not be able to fit all of its data in the initial transmission. In order to determine whether the wireless device 130 may still be allowed to transmit any leftover data to the network node 110 in inactive state, the wireless device 130 may need to inform the network node 110 how much data it may still have in its buffer to transmit, after the initial transmission. For this purpose, the wireless device 130 may send, along with the initial transmission, a BSR, reporting how much leftover data it may have. The leftover data may be referred to herein as the "first data", whereas the data that may be sent in an initial, i.e., earlier transmission, may be referred to herein as "second data". Hence, "first data" and "second data" may be understood to not have a chronological connotation.

The BSR may be sent as value corresponding to a size of a buffer of the wireless device 130. The value may be selected from a set of correspondences between a set of values and a set of buffer sizes. For example, the value may be an index from a table.

According to the foregoing, in some embodiments, the wireless device 130, in this Action 202, may obtain the set of correspondences between the set of values and the set of buffer sizes. In other words, the wireless device 130 may determine the format of the BSR.

Obtaining in this Action 202 may comprise, retrieving or fetching from a memory, determining or calculating, and/or receiving, e.g., from the network node 110. Particularly, as described later, the wireless device 130 may receive the set of correspondences in an Msg3 or MsgA message.

In some examples, the obtaining in this Action 202 may be performed before Action 201, for example, if the set of correspondences is configured in system information which the wireless device 130 may have obtained already earlier, stored in memory, and then retrieve from the memory.

The set of buffer sizes may be, e.g., transmit buffer sizes.

The set of correspondences may be e.g., a table, or a matrix.

The values in the set of values may be, e.g., indices.

The set of correspondences may therefore be understood as a table comprising buffer buffer status report indices each of them corresponding to a Buffer Status Report (BSR). In other words, the set of correspondences may be a BSR table.

The set of correspondences may be based on the threshold.

Either a new BSR format, e.g., any of the ones described below, may be used, or the legacy BSR formats may be used, in which case some of the larger BS entries may never be used.

*New Buffer Status Report format*

As an summarized overview, embodiments herein may be understood to introduce a new buffer size report (BSR) format and/or buffer size (BS) limit to optimize Small Data transmission. The finer BS granularity may be understood to optimize the UL grant size selection to reduce the inefficiency from padding, the max BS limit may provide control of which UEs may be allowed to use the Small Data feature depending on their UL payload size.

*Fixed BSR format*

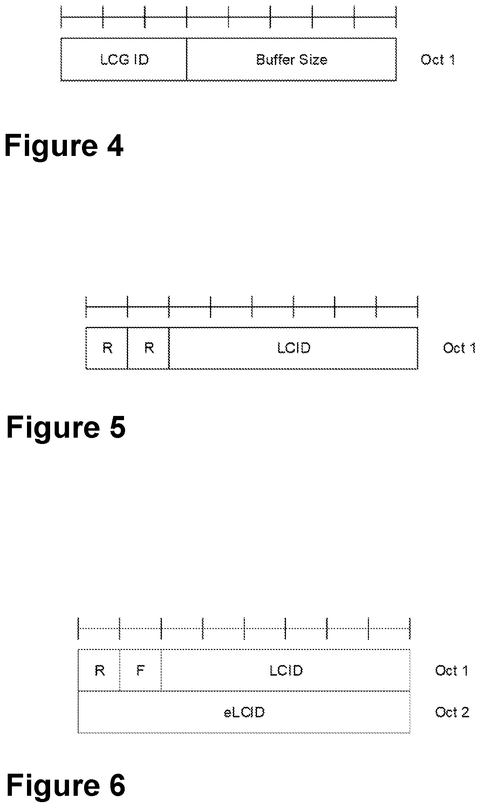

A new BSR format may be introduced for the use of data for which that the size of the buffer of the wireless device 130 may be smaller than the threshold, such as Small Data, e.g., to be multiplexed in Msg3 or in MsgA and with a range adapted for Small Data. One example of a new short BSR format, or rather new interpretation of the content, for Small Data is given in **Figure 4,** where the buffer size may be indicated using **Table 1.** Figure 4 is a schematic diagram illustrating a non-limiting example of a Short Small Data BSR MAC CE, according to embodiments herein.

**Table 1:** Small Data buffer size levels (in bytes) for 5-bit Buffer Size field

| Index | BS value | Index | BS value | Index | BS value | Index | BS value |
|-------|----------|-------|----------|-------|----------|-------|----------|
| 0 | 0 | 8 | ≤ 11 | 16 | ≤ 145 | 24 | ≤ 2052 |
| 1 | ≤ 1 | 9 | ≤ 15 | 17 | ≤ 202 | 25 | ≤ 2859 |
| 2 | ≤ 2 | 10 | ≤ 20 | 18 | ≤ 281 | 26 | ≤ 3982 |
| 3 | ≤ 3 | 11 | ≤ 28 | 19 | ≤ 391 | 27 | ≤ 5548 |
| 4 | ≤ 4 | 12 | ≤ 39 | 20 | ≤ 545 | 28 | ≤ 7729 |
| 5 | ≤ 5 | 13 | ≤ 54 | 21 | ≤ 759 | 29 | ≤ 10767 |
| 6 | ≤ 6 | 14 | ≤ 75 | 22 | ≤ 1057 | 30 | ≤ 15000 |
| 7 | ≤ 8 | 15 | ≤ 104 | 23 | ≤ 1473 | 31 | > 15000 |

That the set of correspondences may be based on the threshold may be understood to mean that: a) the set of values and/or the set of buffer sizes may depend on the threshold, and/or b) the set of correspondences may be constructed and/or assigned based on the threshold.

In this example, 15000 bytes may be used as the maximum data buffer size for the new Small Data BSR format.

Unlike the legacy BSR format, which may be understood to be hardcoded in the specification, this new Small Data BSR format may be made configurable. Since Rel-17 Small Data may be restricted to RRC INACTIVE mode, the configuration may further be UE specific and hence the BSR format tailor-made to the particular UE using Small Data. In this case, the network node 110, e.g., a gNB, may first identify the wireless device 130, e.g., a UE, through the identifier that may be sent in Msg3 or MsgA, then it may be able to retrieve the assigned configuration and interpret correctly the BSR that may be sent in the same message. For example, the maximum buffer size, or the minimum buffer size, see embodiment further down on additional data, may be different for different types of UEs using the Small Data feature. For example, the maximum (max) Transport Block Size (TBS) for simple sensor devices and Reduced Capability UEs, such as Rel-17 RedCap, may likely be smaller than the maximum TBS for higher capability MBB UEs, such as smartphones, e.g., if Rel-17 RedCap will have a limitation in the same way as LTE Cat-M1 may be restricted to a max TBS of 1000 bits. Therefore, a smaller maximum buffer size ($BS_{max}$), may be configured for the RedCap device compared to the $BS_{max}$ configured for a higher capability MBB UE. In an alternative example, the Small Data BSR format to use may instead be configured by common signaling, e.g. in system information, and may be the same for all UEs.

In an example of this, the first entry with buffer size (BS) value 0 and/or the last entry allowing UEs with more data than given by $BS_{max}$ to use the Small Data feature may be omitted and replaced by similar entries as the other rows, see also the example further down on additional data.

In yet an alternative example, the BSR format which may be used by a particular UE may be identified before Msg3/MsgA may be sent, e.g. the format may be selected and identified by the network node 110 based on the random access preamble the wireless device 130 may have sent in Msg1/MsgB. In one example, a "small data BSR format" may be used when wireless device 130 may be identified to use the small data feature for transmission, otherwise one of the existing BSR formats may be used.

Configurable BSR format - constant step size

In an example of this, the wireless device 130 may be configured with a new BSR format based on a maximum buffer size. The $BS_{max}$ may e.g. be determined from the highest supported by the wireless device 130, depending on the maximum supported TBS, or the maximum amount of data may be acceptable for transmission using Small Data, e.g., in the subsequent transmission, either including or excluding the data in the initial Small Data transmission, see below. Instead of configuring every entry in the table, only the $BS_{max}$ may be signaled to the wireless device 130, and the full BSR table determined from the number of entries and the $BS_{max}$ in the following manner.

**Table 2:** Small Data buffer size levels (in bytes) for 5-bit Buffer Size field generated from $BS_{max}$.

| Index | BS value | Index | BS value | Index | BS value | Index | BS value |
|---|---|---|---|---|---|---|---|
| 0 | 0 | 8 | $\leq BS_8$ | 16 | $\leq BS_{16}$ | 24 | $\leq BS_{24}$ |
| 1 | $\leq BS_1$ | 9 | $\leq BS_9$ | 17 | $\leq BS_{17}$ | 25 | $\leq BS_{25}$ |
| 2 | $\leq BS_2$ | 10 | $\leq BS_{10}$ | 18 | $\leq BS_{18}$ | 26 | $\leq BS_{26}$ |
| 3 | $\leq BS_3$ | 11 | $\leq BS_{11}$ | 19 | $\leq BS_{19}$ | 27 | $\leq BS_{27}$ |
| 4 | $\leq BS_4$ | 12 | $\leq BS_{12}$ | 20 | $\leq BS_{20}$ | 28 | $\leq BS_{28}$ |
| 5 | $\leq BS_5$ | 13 | $\leq BS_{13}$ | 21 | $\leq BS_{21}$ | 29 | $\leq BS_{29}$ |
| 6 | $\leq BS_6$ | 14 | $\leq BS_{14}$ | 22 | $\leq BS_{22}$ | 30 | $\leq BS_{30}$ |
| 7 | $\leq BS_7$ | 15 | $\leq BS_{15}$ | 23 | $\leq BS_{23}$ | 31 | $\leq BS_{max}$ |

In one implementation of this example, the BS entries in the table may be determined using the same step size and, hence, having a uniform BS distribution, that is, linear distribution of the BSs. The step may then be determined as:

$$\Delta \ = \ BS_{max} \ /n$$

, where *n* may be understood to be the number of entries in the table minus one, not to account for the first entry with BS value equal to zero , e.g., 31 for a 5-bit Buffer Size field. If the first entry with BS value 0 is omitted, see below, *n* would just be the number of entries in the table or $2^5$=32. The BSs may then be determined as follows:

$$BS_i \ = \ \Delta * i$$

In practice, the number may have to be rounded to an integer using a function, e.g. *round, floor* or *ceil.*

Alternatively, *n-1* may be used in the denominator instead of *n* to, as in the legacy table, allow the last entry to indicate a buffer status larger than $BS_{max}$. However, if the new BSR format is to also ensure that the Small Data feature is not misused by UEs having more data to transmit than the configured $BS_{max}$, the previous implementation may need to be applied instead.

In another alternative, the step size *Δ* may be signaled to the UE and then the UE may determine BSs according to:

$$BS_i \ = \ \Delta * i$$

The step size may e.g. be selected based on a minimum TBS, where the minimum TBS may be the largest TBS a UE at the cell edge may transmit and still meet the target Block Error Rate (BLER). In this way, if the UE signal reports a buffer size <= $BS_i$, the UE may need roughly i UL transmissions, each carrying a TB, to complete its UL data transfer.

*Configurable BSR format - fractional step size*

Having a constant step size and linear distribution of BSs, may however result in more uncertainty for selecting the best UL grant size, and may therefore lead to much larger relative padding for smaller BSs. That is, the granularity may effectively be much larger for the smaller BSs. Therefore, similar to the legacy table, a more beneficial approach may be to let the step size be a fraction s of the previous BS value. For example, according to the following formula:

$$\Delta_i = s \times BS_i$$

If $\Delta_i$ denotes the step from $BS_i$ to $BS_{i+1}$, the following may hold:

$$BS_{max} = BS_{max-1} + \Delta_{max-1} = BS_{max-1} (1+s) = (BS_{max-2} + \Delta_{max-2}) (1+s) = BS_{max-2} (1+s)^2 = \ldots = BS_1 (1+s)^n$$

From this, the following may be deduced

$$s = \sqrt[n]{\frac{BS_{max}}{BS_1}} - 1$$

If BS larger than $BS_{max}$ is not allowed to ensure there is no misuse of the Small Data feature, see above, *n* may be the number of entries in the table minus two, or *n=max-1* , not to account for the first entry with BS value equal to zero, e.g., *max=31* and *n=30* for a 5-bit Buffer Size field. However, note that this may be dependent of if the first entry with BS value 0 is omitted or not, see below. If it is, *max* may be equal to the number of entries in the table or $2^5=32$ and *n=max-1*.

The value of $BS_{max}$ may be configured and signaled to the wireless device 130, and the remaining BSs may then be determined using the following equation:

$$BS_i = BS_1 (1+s)^{i-1}$$

In practice, the number may have to be rounded to an integer using a function, e.g. *round,* floor or *ceil.* To simplify the calculation for the wireless device 130 and avoid rounding errors, an alternative may be to signal the first BS value ($BS_1$) instead of $BS_{max}$ and derive the remaining values using the formula above.

In alternative example, similar to the above, the range of possible signaled values of $BS_i$ may be in a range of roughly equally spaced values on a logarithmic scale, for example:

$$BS_i = round(\sqrt[n]{10^i})$$

Where n may be total number of indexes that may be signaled, and i may be an integer e.g. {0,2,..n-1}.

In order to have a reasonable granularity at small BS volumes and across a large BSR range, and to achieve a geometric sequence with a determinable maximum relative error, the table may be partitioned into interval parts of e.g., 1-10b, 10-100b, 10 - 1000b, etc; for where the resulting signaled BS size values in an interval may be different by setting the partitioning n (interval).

$BS_1$ may be explicitly configured as well, pre-determined, or determined as a function of $BS_{max}$. For example, $BS_1$ may be fixed to 1 byte or 2 bytes independent of $BS_{max}$. In another example, $BS_1$ may be determined as a fraction of $BS_{max}$. A general expression may be formulated as follows, where $\alpha$ may be understood to be the fraction and $\beta$ a constant, which may be zero:

$$BS_1 \; = \; \beta \; + \; \alpha \times BS_{max}$$

Further, it may either be predetermined that the wireless device 130 may need to use a short BSR format of 5-bits, or the number of bits to be used may be made part of the configuration as well, e.g. configurable whether the UE may use a short or long format.

An example of using the fractional step size is given in **Table 3.** Here, $BS_{max}$=30000 bytes, $BS_1$=1 byte, and BS value=0 is not included and BS > $BS_{max}$ is not allowed.

**Table 3:** Small Data buffer size levels (in bytes) for 5-bit Buffer Size field generated from $BS_{max}$ with fractional step size.

| Index | BS value | Index | BS value | Index | BS value | Index | BS value |
|---|---|---|---|---|---|---|---|
| 0 | ≤ 1 | 8 | ≤ 14 | 16 | ≤ 205 | 24 | ≤ 2925 |
| 1 | ≤ 1 | 9 | ≤ 20 | 17 | ≤ 285 | 25 | ≤ 4079 |
| 2 | ≤ 2 | 10 | ≤ 28 | 18 | ≤ 398 | 26 | ≤ 5689 |
| 3 | ≤ 3 | 11 | ≤ 39 | 19 | ≤ 555 | 27 | ≤ 7933 |
| 4 | ≤ 4 | 12 | ≤ 54 | 20 | ≤ 774 | 28 | ≤ 11062 |
| 5 | ≤ 5 | 13 | ≤ 75 | 21 | ≤ 1079 | 29 | ≤ 15427 |
| 6 | ≤ 7 | 14 | ≤ 105 | 22 | ≤ 1504 | 30 | ≤ 21513 |
| 7 | ≤ 10 | 15 | ≤ 147 | 23 | ≤ 2098 | 31 | ≤ 30000 |

It may be noted that for smaller $BS_{max}$, the finer granularity in the first rows of the table may cause rows to have duplicate values, e.g., as index 0 and 1 in the above example. In such a case, the duplicate values may be shifted upwards in a pre-determined manner, e.g. by increasing the size by 1 byte, and repeating this for any new duplicates created until the larger granularity sees to it that no shift may be required. Such a rule may be hardcoded in specification. This problem may also be avoided by starting with determining $BS_1$ and then selecting the fraction s such that s*$BS_1$ >= 1.

*1. Configurable BSR format - intervals*

In a further example, the network node 110 may signal a subset of threshold values ($BS_j$) and then the intermediate values may be computed according to the methods illustrated in Sections 1.2 or 1.3 within each interval.

**Table 4** shows an example where the method used is constant step within each interval defined by the signaled values $BS_0$= 0, $BS_8$= 16, $BS_{16}$= 160, $BS_{24}$= 1600, $BS_{max}$= 30000.

**Table 4:** Small Data buffer size levels (in bytes) for 5-bit Buffer Size field generated from signalled intervals.

| Index | BS value | Index | BS value | Index | BS value | Index | BS value |
|---|---|---|---|---|---|---|---|
| *0* | *≤ 0* | *8* | *≤ 16* | *16* | *≤ 160* | *24* | *≤ 1600* |
| 1 | ≤ 2 | 9 | ≤ 34 | 17 | ≤ 340 | 25 | ≤ 5657 |
| 2 | ≤ 4 | 10 | ≤ 52 | 18 | ≤ 520 | 26 | ≤ 9714 |
| 3 | ≤ 6 | 11 | ≤ 70 | 19 | ≤ 700 | 27 | ≤ 13771 |
| 4 | ≤ 8 | 12 | ≤ 88 | 20 | ≤ 880 | 28 | ≤ 17828 |
| 5 | ≤ 10 | 13 | ≤ 106 | 21 | ≤ 1060 | 29 | ≤ 21885 |
| 6 | ≤ 12 | 14 | ≤ 124 | 22 | ≤ 1240 | 30 | ≤ 25942 |
| 7 | ≤ 14 | 15 | ≤ 142 | 23 | ≤ 1420 | *31* | *≤ 30000* |

*Excluding Buffer Size zero*

In alternative examples of the above, the first entry with a BS value equal to zero may be omitted, since the BSR may not be included in the Small Data transmission unless there is subsequent data. The first entry may also be omitted if the omission of the BSR is used to signal a BS value equal to zero.

**Table 5:** Small Data buffer size levels (in bytes) for 5-bit Buffer Size field generated from $BS_{max}$.

| Index | BS value | Index | BS value | Index | BS value | Index | BS value |
|---|---|---|---|---|---|---|---|
| 0 | $\leq BS_1$ | 8 | $\leq BS_9$ | 16 | $\leq BS_{17}$ | 24 | $\leq BS_{25}$ |
| 1 | $\leq BS_2$ | 9 | $\leq BS_{10}$ | 17 | $\leq BS_{18}$ | 25 | $\leq BS_{26}$ |
| 2 | $\leq BS_3$ | 10 | $\leq BS_{11}$ | 18 | $\leq BS_{19}$ | 26 | $\leq BS_{27}$ |
| 3 | $\leq BS_4$ | 11 | $\leq BS_{12}$ | 19 | $\leq BS_{20}$ | 27 | $\leq BS_{28}$ |
| 4 | $\leq BS_5$ | 12 | $\leq BS_{13}$ | 20 | $\leq BS_{21}$ | 28 | $\leq BS_{29}$ |
| 5 | $\leq BS_6$ | 13 | $\leq BS_{14}$ | 21 | $\leq BS_{22}$ | 29 | $\leq BS_{30}$ |
| 6 | $\leq BS_7$ | 14 | $\leq BS_{15}$ | 22 | $\leq BS_{23}$ | 30 | $\leq BS_{31}$ |
| 7 | $\leq BS_8$ | 15 | $\leq BS_{16}$ | 23 | $\leq BS_{24}$ | 31 | $\leq BS_{max}$ |

The above examples may be generalized to a Buffer Size field other than 5 bits by changing the number of steps and BS entries in the above equations.

It may be noted that whether buffer size zero may be excluded may depend on whether the logical channel group ID is indicated in the BSR or not. For example, if the BS for all logical channel groups is reported in the BSR, e.g., in order of decreasing priority, and the logical channel group ID is determined implicitly from the order in the BS value list, then buffer size zero may be needed to indicate which logical channel groups that have any UL data to send.

According to the examples described in the foregoing sections, in some embodiments, the obtaining in this Action 202 of the set of correspondences, that is, the set of correspondences, may be based on at least one of the following formulas, wherein the threshold may be understood to be a maximum size of the buffer ($BS_{max}$). According to a first group of options, a step size of the set of correspondences may be obtained as one of: a) $\Delta = BS_{max}/n$, wherein n is a number of correspondences, or the number of correspondences minus one or two, b) $\Delta_i = s \times BS_i$, wherein s is a fraction of a previous threshold value in the set of buffer sizes, and c) $\Delta_i = s \times BS_i$, wherein $s = \sqrt[n]{\dfrac{BS_{max}}{BS_1}} - 1$.

According to a first group of options, each buffer size in the set of buffer sizes may be obtained as one of: a) $BS_i = \Delta * i$, b) $BS_i = BS_1 (1+s)^{i-1}$, c) $BS_i = round(\sqrt[n]{10^i})$, d) $BS_1 = \beta + \alpha \times BS_{max}$, wherein $\alpha$ is a fraction of $BS_{max}$ and $\beta$ is a constant, and e) another function of the $BS_{max}$.

In some examples, the obtained set of correspondences may comprise duplicated values. In some of such examples, the obtaining in this Action 202 of the set of correspondences may further comprise determining a first buffer size ($BS_1$) of the set of buffer sizes, and then at least one of: a) selecting the fraction s such that s*$BS_1$ >= 1, and b) shifting any of the duplicates based on a determined value.

In some examples, the obtained first indication may comprise a subset of the values to be comprised in the set of correspondences. In some of such examples, the obtaining in this Action 202 of the set of correspondences may be performed within each interval defined by the obtained subset of values. In such examples, the obtaining in Action 202 may comprise determining.

In some embodiments, the set of buffer sizes may omit a buffer size equal to zero.

*Alignment of BSR and TBS table entries*

In one example, the table entries for BSR and TBS may be aligned to avoid unnecessary padding. If the wireless device 130 that may report its buffer status may need to round up to the nearest higher BSR value and then network node 110 may need to round up to the next higher TBS to be able to schedule the wireless device 130 and ensure that the wireless device 130 is able to transmit all the data in its buffer, there may be understood to be an efficiency loss due to rounding up twice rather than only once. It may be possible that this will result in the need to carry out more data transmissions than would otherwise be needed. This may be avoided by ensuring that the BSR table entries are aligned with the TBS table entries.

According to the foregoing, in some examples, the set of buffer sizes may align with a set of Transport Block Sizes (TBSs) configured to be used by the wireless device 130.

This alignment with the allowed TBS values may be performed in the rounding operation in any of the embodiments mentioned earlier. For example, the BSR values that may be reported by the wireless device 130 may be multiples of the allowed TBS values, where the allowed TBS values may be either given by the UE type or by the Small Data configuration. If the wireless device 130 reports an anticipated BSR with an anticipated periodicity, the wireless device 130 may be scheduled with periodic transmissions where each transmission may have minimum loss in terms of excessive rounding.

By obtaining the set of correspondences in this Action 202, the wireless device 130 may be enabled to use a BSR format which may be tailor-made to it, so that, for example, the granularity of the BSR may be adapted to the type of the wireless device 130. This may enable the wireless device 130 to more accurately report the amount of second data it may still have to transmit to the network node 110, so that the network node 110 may better evaluate whether the transmission is small enough to be allowed in inactive state, or if it may be more efficient for the wireless device 130 to go into connected state.

**Action 203**

In this Action 203, the wireless device 130 sends 203 an indication, referred to herein as a "second indication", to the network node 110. The indication, that is, the second indication, comprises a value, e.g., a first value, selected from the set of values. The selected value corresponds to the size of the buffer of the wireless device 130 detected or expected to be had during the inactive state at a time of one or more transmissions. The sending in this Action 203 of the second indication is performed with the proviso that a size of the buffer is smaller than the threshold.

The sending in this Action 203 may be performed, e.g., via the first link 141.

The second indication may be understood to be a Buffer Status Report (BSR). As background, in legacy, the BSR may be understood to serve the purpose of informing a network node, e.g., a gNB, of how much data the UE has to transmit, so it may provide the UE with a suitable UL grant size. For Rel-17 Small Data, it may be understood that a first part of the data may be transmitted in the initial Small Data transmission. If all data fits in this initial message, there may be no need for a BSR. The BSR report that may be transmitted in the initial Small Data transmission may indicate the remaining data after the initial transmission using Small Data transmission, which may be understood to be legacy procedure.

In some examples, the second indication may be a Medium Access Control (MAC) Control Element (CE).

The buffer may be a buffer for transmission, which may be referred to herein as a transmit buffer.

*Anticipated BSR*

In one example, the wireless device 130 may provide a BSR indicating the anticipated data volume in the buffer of the wireless device 130 applicable for at least one later time instance when the UE may expect to perform a small data transmission, that is, the size of the buffer of the wireless device 130 expected to be had during the inactive state at the time of the one or more transmissions.

The wireless device 130 may base the anticipated BSR on knowledge about the use case it may support and its expected traffic pattern. A UE supporting a utility meter application may e.g., be associated with a periodic transmission of a data packet of predictable size.

The anticipated BSR may e.g. assist the network node 110 to provide the wireless device 130 with an accurate configured grant, e.g. in terms of TBS and MCS, for uplink data transmission on one or more preconfigured uplink time-frequency resource supporting data transmission from RRC inactive state.

*Buffer Status Report and Release Assistance Indication*

In a further example, not only the BSR may be transmitted. In some embodiments, the second indication may further comprise a third indication. The third indication may indicate an amount of data the wireless device 130 may expect to exchange with the network node 110 within a future time period. To give to the network node 110 a full overview of what may be expected to be transmitted in the immediate future, a Release Assistance Indication (RAI) may be included as an example of the third indication. This indication may provide information on the expected presence of a downlink reply, so that the network node 110 may release or not the wireless device 130 as quickly as possible. This may happen for instance if the wireless device 130 may send a sensor update and may expect an application layer acknowledge from the network, which may normally happen if a Transmission Control Protocol (TCP) protocol is used. Normally, information on the UL may be given by the BSR itself, but the RAI may be signaled also if the amount of UL data is expected to increase soon, although not yet in the buffer.

The resulting MAC CE may be composed by any of the aforementioned BSR formats, plus a limited number of bits used for the RAI. These bits may encode a series of codepoint representing different scenarios. A possible, but not limited to, list of codepoints may be: No information, DL reply expected, DL reply not expected, and/or Further UL data expected, not indicated in the BSR yet.

In one example, Access Stratum (AS) RAI, e.g. as specified in Rel-16, or as above, code points may be included using bits intended for "LCG ID", see the section below entitled "Omitting the logical channel group ID".

In one example, AS RAI may be encoded in R, and R, or R and F bits in the MAC PDU subheader may be used for BSR, see **Figure 5** and **Figure** 6 below, therefore the BSR format may be used as-is, and RAI information may be in the subheader instead of the MAC CE.HB.

*Lightweight signalling*

In an alternative example, the buffer status reporting may entail only lightweight signaling of an indication of more data in the UE buffer. The signaling indication may in this case use a single byte MAC header in which a, e.g. single- or two-bit indication, or specific Logical Channel IDentifier (LCID)/eLCID may be set relative to a fixed or configurable threshold. For example, RRC may configure MAC with a Transport Block size (TB), or a set of TBs, for a Logical CHannel (LCH), or a set of LCHs; over which the wireless device 130 may evaluate if the UE buffer may be emptied within another scheduling cycle, or a configured number of scheduling cycles, alternatively relative to a TB in a set of TBs configured. Transmitting the indication, the receiver, at the scheduling end, may as a result determine if the wireless device 130 may benefit from additional scheduling opportunities, and in some examples also using an estimated TB size/grant(s). In an example implementation, the Rel-16 38.321 MAC header reserved bit(s) may be used for this purpose. See Figure 5 and Figure 6. According to the foregoing, in some embodiments, the second indication may further comprise a fourth indication indicating a LCGID for which the second indication may be reported. That is, the LCGID field in the BSR may indicate the LCG for which the BS may be reported.

To summarize the last two sets of embodiments, the second indication may further comprise one of: a) the third indication indicating an amount of data the wireless device 130 may expect to exchange with the network node 110 within a future time period, and b) the fourth indication indicating a Logical Channel Group Identifier (LCGID) for which the second indication may be reported.

*Omitting the logical channel group ID*

As stated earlier, the Logical Channel Group (LCG) ID field in the BSR may indicate the LCG for which the BS may be reported. By omitting the LCG ID field, the size of the BSR may be reduced, or alternatively, more BS values may be allowed for. This may be accomplished by preconfiguring the LCG ID which the small data feature may be used for, e.g., for example if small data may only be used for LCG ID = 1, then the LCG ID may not need to be indicated in the BSR.

The size of the BSR may be reduced, e.g., alternatively, by reporting the aggregated buffer size calculated for all LCG in the BSR. In one example, when a specified or pre-determined LCG ID may be used for the small data feature, a reserved bit in MAC PDU subheader may be used to indicate whether all data is included in the MAC PDU, or whether there may be more data in the buffer, see the section entitled "Lightweight signalling" above.

By sending the indication, the wireless device 130 may enable the network node 110to know the amount of data the wireless device 130 may still have to transmit, so that the network node 110 may evaluate whether the transmission is small enough to be still allowed as an additional transmission in inactive state, or if it may be more efficient for the wireless device to transmit the remaining data in connected state. Furthermore, by reporting the buffer size, the wireless device 130 may enable the network node 110 to send back an UL grant tailored to the size the wireless device 130 may need, in order to may avoid that the UL grant sent by the network node 110 may need to be filled out with padding bits for being too large, which would a waste of resources. The wireless device may therefore be enabled to avoid being released to inactive after the initial transmission when it may have more data to transmit, and thereby also avoid having to initiate a new Random Access procedure from start. Hence, overhead signaling may be enabled to be decreased or minimized in comparison with that that would be required for the legacy procedure. Accordingly, a control mechanism for when the Small Data feature may be used depending on the payload size may be enabled, which may ensure this feature is advantageously used in the wireless communications network but not abused, by for example, the wireless device having too much data.

By sending the second indication according to any of the new formats in this Action 203, the wireless device 130 may be enabled to more accurately report the amount of second data it may still have to transmit to the network node 110, so that the network node 110 may better evaluate whether the transmission is small enough to be allowed in inactive state, or if it may be more efficient for the wireless device 130 to go into connected state in order to transmit it. By accurately reporting the buffer size, the wireless device 130 may additionally enable to avoid that any UL grant sent by the network node 110 may need to be filled out with padding bits for being too large, which would otherwise be inefficient.

Furthermore, by sending the second indication, the wireless device 130 may be enabled to report the amount of second data it may still have to transmit to the network node 110 with lightweight signalling, which may be understood to optimize the usage of resources in the wireless communications network 100.

**Action 204**

In this Action 204, the wireless device 130 receives the uplink grant from the network node 110, based on the sent indication, that is, the second indication.

The receiving in this Action 204 of the uplink grant may be performed with the proviso that the size of the buffer is smaller than the threshold.

The receiving in this Action 204 may be performed, e.g., via the first link 141.

By the uplink grant received from the network node 110 being based on the indication, the wireless device 130 may enable the network node 110 to enforce the control mechanism of when the Small Data feature may be used depending on the payload size, so that this feature is advantageously used in the wireless communications network 100, but not abused.

**Action 205**

In this Action 205, the wireless device 130 sends first data to the network node 110 during an inactive state of the wireless device 130. The first data is user plane data. The sending in this Action 205 of the first data is performed according to the uplink grant received from the network node 110. That is, the sending in this Action 205 may be performed in radio-frequency resources according to the uplink grant received from the network node 110.

The sending in this Action 205 of the first data is performed with the proviso that the size of the buffer of the wireless device 130 is smaller than the threshold. The buffer is a buffer for transmission.

As stated earlier, the threshold may be a maximum size of the buffer ($BS_{max}$), e.g., a maximum transmit buffer size.

The sending in Action 203 of the second indication is performed prior to the sending in Action 205 of one or more data packets comprising at least a part of the first data. For example, the sending in Action 203 of the second indication may be performed together with the sending of the second data, that is the "initial transmission" of data in the inactive state.

In some examples, the buffer of the wireless device 130 may be referred to as a second buffer. The second buffer may be a buffer remaining from a first buffer the wireless device 130 had prior to sending the initial transmission of second data to the network node 110 in the inactive state, the first buffer having had a first size larger than the threshold. In other words, the wireless device 130 may have initially had a set of data in its buffer having a size larger than the threshold. The set of data may have comprised the second data and the first data. First, the wireless device 130 may have sent a first subset of the set of data, that is, the second data, to the network node 110. Subsequently, the wireless device 130 may have sent a second set of the set of data, that is, the first data, to the network node 110.

Explained differently with a non-limiting example, for small data e.g. sending a sensor reading once and hour:

1. First, the wireless device 130 has no data in the buffer,
2. Second, data may arrive in the buffer for the wireless device 130,
3. The wireless device 130 may initiate Small Data transmission and may include a first part, the "second data", of the data in the buffer; a BSR may be included to obtain a grant for the remaining part of the data.
4. The wireless device 130 may then transmit the rest of the data, the "first data" in the UL grant provided based on the BSR, or multiple grants. The transmitting of the rest of the data may be performed according to Action 205.

The sending in this Action 205 may be performed, e.g., via the first link 141.

The uplink grant may be based on the set of correspondences.

The inactive state may be, e.g., as defined in 5G or in a younger system having equivalent functionality.

The sending in Action 203 of the second indication may be performed prior to the sending in this Action 205 of one or more data packets comprising at least a part of the first data.

By sending the first data using the UL grant sent by the network node 110, the wireless device 130 may be enabled to avoid having to initiate a new Random Access procedure from start. Hence, overhead signaling may be enabled to be decreased or minimized in comparison with that that would be required for the legacy procedure. Accordingly, a control mechanism for when the Small Data feature may be used depending on the payload size may be enabled, which may ensure this feature is advantageously used in the wireless communications network but not abused, by for example, wireless devices having too much data.

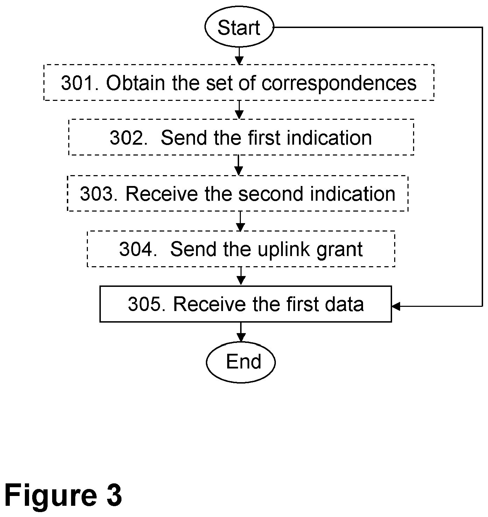

Embodiments of a method performed by the network node 110, will now be described with reference to the flowchart depicted in Figure 3. The method may be understood to be for handling transmission of data by a wireless device, such as the wireless device 130. The wireless device 130 and the network node 110 operate in the wireless communications network 100.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

In some examples, data may be "Small Data".

The method may be understood to be a computer-implemented method.

The method may comprise one or more of the following actions. Several embodiments are comprised herein. In some embodiments all the actions may be performed. It should be noted that the examples herein are not mutually exclusive. One or more embodiments may be combined, where applicable. All possible combinations are not described to simplify the description. Components from one embodiment may be tacitly assumed to be present in another embodiment and it will be obvious to a person skilled in the art how those components may be used in the other exemplary embodiments. A non-limiting example of the method performed by the network node 110 is depicted Figure 3. Some actions may be performed in a different order than that shown in Figure 3.

In Figure 3, optional actions are represented with dashed lines. The detailed description of some of the following corresponds to the same references provided above, in relation to the actions described for the wireless device 130, and will thus not be repeated here to simplify the description. For example, the set of correspondences may be, e.g., a table or a matrix.

### Action 301

In this Action 301, the network node 110 may obtain the set of correspondences.

Obtaining in this Action 301 may comprise, retrieving or fetching from a memory, determining or calculating, and/or receiving, e.g., from another network node or from the wireless device 130.

In some embodiments, the set of correspondences may be preconfigured in the network node 110.

The set of correspondences may correspond to the wireless device 130.

The set of correspondences may be between the set of values and the set of buffer sizes, e.g., transmit buffer sizes.

The set of correspondences may be e.g., a table, or a matrix.

The values in the set of values may be, e.g., indices.

The set of correspondences may be based on the threshold. That the set of correspondences may be based on the threshold may be understood to mean that: a) the set of values and/or the set of buffer sizes may depend on the threshold, and/or b) the set of correspondences may be constructed and/or assigned based on the threshold.

In some embodiments, the set of correspondences, e.g., the obtaining in Action 301 of the set of correspondences, may be based on at least one of the following formulas, wherein the threshold may be a maximum size of the buffer ($BS_{max}$). According to a first group of options, the step size of the set of correspondences may be obtained as one of: a) $\Delta = BS_{max}/n$, wherein n is the number of correspondences, or the number of correspondences minus one or two, b) $\Delta_i = s \times BS_i$, wherein s is the fraction of the previous threshold value in the set of buffer sizes, and c) $\Delta_i = s \times BS_i$, wherein

$$s = \sqrt[n]{\frac{BS_{max}}{BS_1}} - 1$$

. According to a second group of options, each buffer size in the set of buffer sizes may be obtained as one of: a) $BS_i = \Delta * i$, b) $BS_i = BS_1 (1+s)^{i-1}$, c) $BS_i = round(\sqrt[n]{10^i})$, d) $BS_1 = \beta + \alpha \times BS_{max}$, wherein $\alpha$ is a fraction of $BS_{max}$ and $\beta$ is a constant, and e) another function of the $BS_{max}$.

In some embodiments, the set of correspondences, e.g., the obtained set of correspondences may comprise duplicated values. In some of such examples, the obtaining in this Action 301 of the set of correspondences may further comprise determining a first buffer size ($BS_1$) of the set of buffer sizes, and then at least one of: a) selecting the fraction s such that $s*BS_1 >= 1$, and b) shifting any of the duplicates based on the determined value.

In some examples, at least one of the following may apply, a) the set of buffer sizes may , and b) the set of buffer sizes may align with a set of Transport Block Sizes (TBSs) configured to be used by the wireless device 130.

In some of such examples, the obtaining in this Action 301 of the set of correspondences may be performed within each interval defined by the obtained subset of values. In such examples, the obtaining in Action 301 may comprise determining.

### Action 302

In this Action 302, the network node 110 may sending the first indication to the wireless device 130. The first indication may indicate the threshold.

In other examples, the sending in this Action 302 may be performed, e.g., via the first link 141.

In some examples, the first indication may further indicate the set of correspondences.

In some embodiments, the sent first indication may comprise a subset of the values to be comprised in the set of correspondences.

**Action 303**

In this Action 303, the network node 110 receives the indication, referred to herein as a "second indication", from the wireless device 130. The indication, that is, the second indication, comprises the value, e.g., the first value, corresponding to the size of the buffer of the wireless device 130 detected or expected to be had during the inactive state of the wireless device 130 at the time of one or more transmissions. The receiving in this Action 303 of the indication, namely, the second indication, is performed with the proviso that the size of the buffer may be smaller than the threshold.

The value comprised in the second indication may be comprised in the set of values in the obtained set of correspondences.

The value may correspond to the size of the buffer of the wireless device 130 detected, or expected to be had, during the inactive state of the wireless device 130, e.g., at a time of one or more transmissions.

The receiving in this Action 303 of the second indication may be performed with the proviso that the size of the buffer is smaller than the threshold.

The receiving in this Action 303 may be performed, e.g., via the first link 141.

In some examples, the second indication may be the MAC CE.

In some examples, the second indication may further comprise one of: a) the third indication indicating the amount of data the wireless device 130 may expect to exchange with the network node 110 within the future time period, and b) the fourth indication indicating the Logical Channel Group Identifier (LCGID) for which the second indication may be reported.

**Action 304**

In this Action 304, the network node 110 sends the uplink grant to the wireless device 130 based on the received indication, namely, the second indication.

The sending in this Action 304 of the uplink grant from the network node 110 may be based on the received second indication.

The sending in this Action 304 of the uplink grant may be performed with the proviso that the size of the buffer is smaller than the threshold.

The sending in this Action 304 may be performed, e.g., via the first link 141.

**Action 305**

In this Action 305, the network node 110 receives the first data from the wireless device 130 during the inactive state of the wireless device 130. The first data is user plane data. The receiving in this Action 305 of the first data is performed according to the uplink grant sent by the network node 110. That is, the receiving in this Action 305 may be performed in radio-frequency resources according to the uplink grant sent by the network node 110.

The receiving in this Action 305 of the first data is performed with the proviso that the size of the buffer of the wireless device 130, previously indicated to the network node 110, is smaller than the threshold. The buffer is the buffer for transmission, which may be referred to herein as a transmit buffer.

As stated earlier, the inactive state may be, e.g., as defined in 5G or in a younger system having equivalent functionality.

The threshold may be the maximum size of the buffer ($BS_{max}$), e.g., the maximum transmit buffer size.

In some embodiments, the buffer of the wireless device 130 may be referred to as the second buffer. The second buffer may be a buffer remaining after receiving the initial transmission of the second data from the wireless device 130, e.g., in the inactive state. A combination of the first data and the second data had the first size larger than the threshold. In other words, the wireless device 130 may have initially had the set of data in its buffer having the size larger than the threshold. The set of data may have comprised the second data and the first data. First, the network node 110 may have received the first subset of the set of data, that is, the second data, from the wireless device 130. Subsequently, the network node 110 may have received the second set of the set of data, that is, the first data, from the wireless device 130.

In some examples, the threshold may be preconfigured in the network node 110, and e.g., in the wireless device 130.

The receiving in Action 303 of the second indication may be performed prior to the receiving in this Action 305 of the first data. For example, the receiving in Action 303 of the second indication may be performed together with the receiving of the second data.

The receiving in this Action 303 of the second indication may be performed prior to the receiving 305 of the one or more data packets comprising at least a part of the first data.

The receiving in this Action 305 may be performed, e.g., via the first link 141.

Certain embodiments disclosed herein may provide one or more of the following technical advantage(s), which may be summarized as follows. Embodiments herein, may be understood to, with the max buffer size limitation or use of data payload threshold, counteract the misuse of the Small Data feature. Further, for additional data, further transmission(s) after the initial Small Data transmission, the granularity of the BSR may be improved for smaller data payloads, such that the UL grant size selection may be optimized.

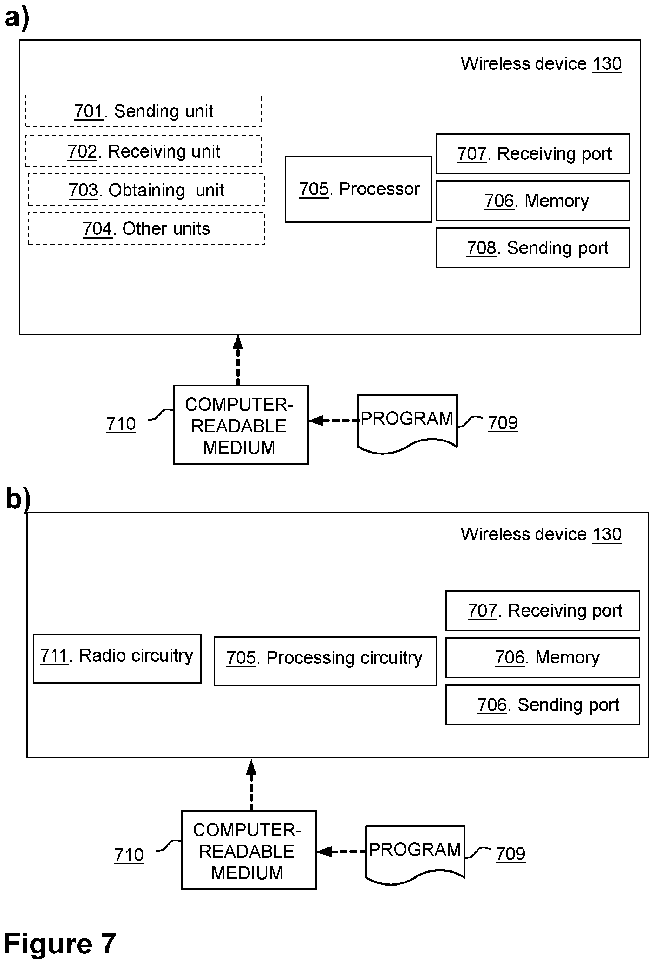

**Figure 7** depicts two different examples in panels a) and b), respectively, of the arrangement that the wireless device 130 may comprise to perform the method actions described above in relation to Figure 2. In some embodiments, the wireless device 130 may comprise the following arrangement depicted in **Figure 7a.** The wireless device 130 may be understood to be for handling the transmission of data to the network node 110. The wireless device 130 and the network node 110 are configured to operate in the wireless communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the wireless device 130 and will thus not be repeated here. For example, the second indication may be a BSR according to any of the formats described.

In Figure 7, optional units are indicated with dashed boxes.

The wireless device 130 is configured to perform the sending of Action 203, e.g. by means of a **sending unit 701** within the wireless device 130, configured to send the indication to the network node 110, that is, the second indication. The indication is configured to comprise the value configured to be selected from the set of values. The selected value is configured to correspond to the size of the buffer of the wireless device 130 configured to be detected or expected to be had during the inactive state at the time of one or more transmissions. The sending of the indication is configured to be performed with the proviso that the size of the buffer is smaller than the threshold.

The wireless device 130 is configured to perform the receiving of Action 205, e.g. by means of a **receiving unit 702,** configured to receive the uplink grant from the network node 110, based on the indication configured to be sent.

The wireless device 130 is also configured to perform the sending of Action 205, e.g. by means of the sending unit 701 within the wireless device 130, configured to, send the first data to the network node 110 during the inactive state of the wireless device 130. The first data is configured to be user plane data. The sending of the first data is configured to be performed according to the uplink grant configured to be received from the network node 110. The sending of the first data is configured to be performed with the proviso that the size of the buffer of the wireless device 130 is smaller than the threshold. The buffer is configured to be the buffer for transmission. The sending of the indication is configured to be performed prior to the sending of the one or more data packets comprising at least the part of the first data.

In some embodiments, the buffer of the wireless device 130 may be configured to be the second buffer remaining from the first buffer the wireless device 130 had prior to sending the initial transmission of second data to the network node 110 in the inactive state. The first buffer may be configured to have had the first size larger than the threshold.

In some embodiments, the threshold may be preconfigured in the wireless device 130.

In some embodiments, the indication may be configured to be the second indication and the wireless device 130 may be configured to perform the obtaining of Action 201, e.g. by means of an **obtaining unit 703,** configured to obtain the first indication from the network node 110. The first indication is configured to indicate the threshold.

The wireless device 130 may be configured to perform the obtaining of Action 202, e.g. by means of the obtaining unit 703, configured to obtain the set of correspondences between the set of values and a set of buffer sizes, the set of correspondences being configured to be based on the threshold.

In some embodiments, the obtaining of the set of correspondences may be configured to be based on at least one of the following formulas. The threshold may be configured to be the maximum size of the buffer $BS_{max}$. According to the first group of options, the step size of the set of correspondences may be configured to be obtained as one of: a) $\Delta = BS_{max}/n$, wherein n may be configured to be the number of correspondences, or the number of correspondences minus one or two, b) $\Delta_i = s \times BS_{i,}$ wherein s may be configured to be a fraction of a previous threshold value in the set of buffer sizes, and c) $\Delta_i = s \times BS_i$, wherein $s = \sqrt[n]{\dfrac{BS_{max}}{BS_1}} - 1$. According to the second group of options, each buffer size in the set of buffer sizes may be configured to be obtained as one of: a) $BS_i = \Delta * i$, b) $BS_i = BS_i\,1+s^{i-1}$, c) $BS_i = \text{round}\sqrt[n]{10^i}$, d) $BS_1 = \beta + \alpha \times BS_{max}$, wherein $\alpha$ may be configured to be a fraction of $BS_{max}$ and $\beta$ is configured to be a constant, and e) another function of the $BS_{max}$.

In some embodiments, the set of correspondences configured to be obtained may be configured to comprise duplicated values, and the obtaining of the set of correspondences may be further configured to comprise determining the first buffer size $BS_1$ of the set of buffer sizes, and then at least one of: a) selecting the fraction s such that s* $BS_1$ >= 1, and b) shifting any of the duplicates based on a determined value.

In some embodiments, the first indication configured to be obtained may be configured to comprise the subset of the values to be configured to be comprised in the set of correspondences. The obtaining of the set of correspondences may be configured to be performed within each interval configured to be defined by the subset of values configured to be obtained.

In some embodiments, at least one of the following may apply: a) the set of buffer sizes may be configured to omit the buffer size equal to zero, and b) the set of buffer sizes may be configured to align with the set of Transport Block Sizes configured to be used by the wireless device 130.

In some embodiments, wherein the indication may be configured to be the second indication, and the second indication may be configured to be a MAC CE.

In some embodiments, the indication may be configured to be the second indication. The second indication may be further configured to comprise one of: a) the third indication configured to indicate the amount of data the wireless device 130 expects to exchange with the network node 110 within the future time period, and b) the fourth indication configured to indicate the LCGID, for which the second indication may be configured to be reported.

**Other units 704** may be comprised in the wireless device 130.

The embodiments herein in the wireless device 130 may be implemented through one or more processors, such as a **processor 705** in the wireless device 130 depicted in Figure 7a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the wireless device 130. One such carrier may be in the form of a CD ROM disc. It is however feasible with other data carriers such as a memory stick. The computer program code may furthermore be provided as pure program code on a server and downloaded to the wireless device 130.

The wireless device 130 may further comprise a **memory 706** comprising one or more memory units. The memory 706 is arranged to be used to store obtained information, store data, configurations, schedulings, and applications etc. to perform the methods herein when being executed in the wireless device 130.

In some embodiments, the wireless device 130 may receive information from, e.g., the network node 110, through a **receiving port 707.** In some embodiments, the receiving port 707 may be, for example, connected to one or more antennas in wireless device 130. In other embodiments, the wireless device 130 may receive information from another structure in the wireless communications network 100 through the receiving port 707. Since the receiving port 707 may be in communication with the processor 705, the receiving port 707 may then send the received information to the processor 705. The receiving port 707 may also be configured to receive other information.

The processor 705 in the wireless device 130 may be further configured to transmit or send information to e.g., the network node 110, or another structure in the wireless communications network 100, through a **sending port 708,** which may be in communication with the processor 705, and the memory 706.

Those skilled in the art will also appreciate that the different units 701-704 described above may refer to a combination of analog and digital modules, and/or one or more processors configured with software and/or firmware, e.g., stored in memory, that, when executed by the one or more processors such as the processor 705, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different units 701-704 described above may be implemented as one or more applications running on one or more processors such as the processor 705.

Thus, the methods according to the embodiments described herein for the wireless device 130 may be respectively implemented by means of a **computer program 709** product, comprising instructions, i.e., software code portions, which, when executed on at least one processor 705, cause the at least one processor 705 to carry out the actions described herein, as performed by the wireless device 130. The computer program 709 product may be stored on a **computer-readable storage medium 170.** The computer-readable storage medium 170, having stored thereon the computer program 709, may comprise instructions which, when executed on at least one processor 705, cause the at least one processor 705 to carry out the actions described herein, as performed by the wireless device 130. In some embodiments, the computer-readable storage medium 170 may be a non-transitory computer-readable storage medium, such as a CD ROM disc, or a memory stick. In other embodiments, the computer program 709 product may be stored on a carrier containing the computer program 709 just described, wherein the carrier is one of an electronic signal, optical signal, radio signal, or the computer-readable storage medium 170, as described above.

The wireless device 130 may comprise a communication interface configured to facilitate communications between the wireless device 130 and other nodes or devices, e.g., the network node 110. The interface may, for example, include a transceiver configured to transmit and receive radio signals over an air interface in accordance with a suitable standard.

In other embodiments, the wireless device 130 may comprise the following arrangement depicted in **Figure 7b.** The wireless device 130 may comprise a **processing circuitry 705,** e.g., one or more processors such as the processor 705, in the wireless device 130 and the memory 706. The wireless device 130 may also comprise a **radio circuitry 711,** which may comprise e.g., the receiving port 707 and the sending port 708. The processing circuitry 711 may be configured to, or operable to, perform the method actions according to Figure 2, in a similar manner as that described in relation to Figure 7a. The radio circuitry 711 may be configured to set up and maintain at least a wireless connection with the network node 110. Circuitry may be understood herein as a hardware component.

Hence, embodiments herein also relate to the wireless device 130 comprising the processing circuitry 705 and the memory 706, said memory 706 containing instructions executable by said processing circuitry 705, whereby the wireless device 130 is operative to perform the actions described herein in relation to the wireless device 130, e.g., in Figure 2.

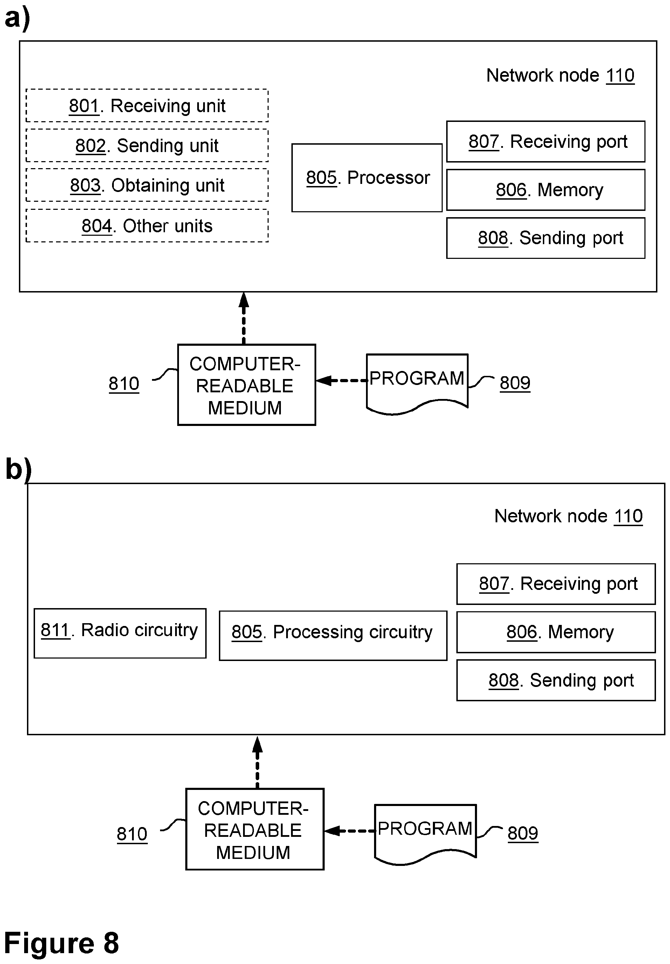

**Figure 8** depicts two different examples in panels a) and b), respectively, of the arrangement that the network node 110 may comprise to perform the method actions described above in relation to Figure 3. In some embodiments, the network node 110 may comprise the following arrangement depicted in **Figure 8a.** The network node 110 may be understood to be for handling the transmission of data by the wireless device 130. The network node 110 is configured to operate in the wireless communications network 100.

Several embodiments are comprised herein. Components from one embodiment may be tacitly assumed to be present in another embodiment and it will be obvious to a person skilled in the art how those components may be used in the other exemplary embodiments. The detailed description of some of the following corresponds to the same references provided above, in relation to the actions described for the wireless device 130 and the network node 110, and will thus not be repeated here. For example, the second indication may be a BSR according to any of the formats described.

In Figure 8, optional units are indicated with dashed boxes.

The network node 110 is configured to perform the receiving of Action 303, e.g. by means of a **receiving unit 801** within the network node 110, configured receive the indication, that is, the second indication, from the wireless device 130. The indication is configured to comprise the value corresponding to the size of the buffer of the wireless device 130 configured to be detected or expected to be had during the inactive state of the wireless device 130 at the time of the one or more transmissions. The receiving of the indication is configured to be performed with the proviso that the size of the buffer is smaller than the threshold.

The network node 110 is configured to perform the sending of Action 304, e.g. by means of a **sending unit 802,** configured to, send the uplink grant to the wireless device 130, configured to be based on the indication configured to be received.

The network node 110 is configured to perform the receiving of Action 305, e.g. by means of the receiving unit 801 within the network node 110, configured to receive the first data from the wireless device 130 during the inactive state of the wireless device 130. The first data is configured to be user plane data. The receiving of the first data is configured to be performed according to the uplink grant configured to be sent by the network node 110. The receiving of the first data is configured to be performed with the proviso that the size of the buffer of the wireless device 130 configured to be previously indicated to the network node 110, is smaller than the threshold. The buffer is configured to be the buffer for transmission.

In some embodiments, the buffer of the wireless device 130 may be configured to be the second buffer remaining after receiving the initial transmission of second data from the wireless device 130 in the inactive state. A combination of the first data and the second data may have had the first size larger than the threshold.

In some embodiments, the indication may be configured to be the second indication and the network node 110 may be configured to perform the sending of Action 302, e.g. by means of the sending unit 802, configured to, send the first indication to the wireless device 130. The first indication may be configured to indicate the threshold.

In some embodiments, the indication may be configured to be the second indication and the network node 110 may be configured to perform the obtaining of Action 301, e.g. by means of an **obtaining unit 803,** configured to obtain the set of correspondences corresponding to the wireless device 130. The set of correspondences may be configured to be between the set of values and the set of buffer sizes. The set of correspondences may be configured to be based on the threshold. The value configured to be comprised in the second indication may be configured to be comprised in the set of values.

The first indication may be further configured to indicate the set of correspondences.

In some embodiments, the set of correspondences may be configured to be based on at least one of the following formulas. The threshold may be configured to be the maximum size of the buffer $BS_{max}$. According to the first group of options, the step size of the set of correspondences may be configured to be obtained as one of: a) $\Delta = BS_{max}/n$, wherein n may be configured to be the number of correspondences, or the number of correspondences minus one or two, b) $\Delta_i = s \times BS_{i,}$, wherein s may be configured to be a fraction of a previous threshold value in the set of buffer sizes, and c) $\Delta_i = s \times BS_i$, wherein $s = \sqrt[n]{\frac{BS_{max}}{BS_1}} - 1$. According to the second group of options, each buffer size in the set of buffer sizes may be configured to be obtained as one of: a) $BS_i = \Delta * i$, b) $BS_i = BS_1\ 1+s^{i-1}$, c) $BS_i = \text{round}\sqrt[n]{10^i}$, d) $BS_1 = \beta + \alpha \times BS_{max}$, wherein $\alpha$ may be configured to be a fraction of $BS_{max}$ and $\beta$ is configured to be a constant , and e) another function of the $BS_{max}$.

In some embodiments, the set of correspondences configured to be obtained may be configured to comprise duplicated values, and the obtaining of the set of correspondences may be further configured to comprise determining the first buffer size $BS_1$ of the set of buffer sizes, and then at least one of: a) selecting the fraction s such that s* BS, >= 1, and b) shifting any of the duplicates based on a determined value.

In some embodiments, the first indication configured to be sent may be configured to comprise the subset of the values to be configured to be comprised in the set of correspondences.

In some embodiments, at least one of the following may apply: a) the set of buffer sizes may be configured to omit the buffer size equal to zero, and b) the set of buffer sizes may be configured to align with the set of Transport Block Sizes configured to be used by the wireless device 130.

In some embodiments, wherein the indication may be configured to be the second indication, the second indication may be configured to be a MAC CE.

In some embodiments, the indication may be configured to be the second indication. The second indication may be further configured to comprise one of: a) the third indication configured to indicate the amount of data the wireless device 130 expects to exchange with the network node 110 within the future time period, and b) the fourth indication configured to indicate the LCGID, for which the second indication may be configured to be reported.

In some embodiments, the set of correspondences may be preconfigured in the network node 110.

**Other units 804** may be comprised in the network node 110.

The embodiments herein in the network node 110 may be implemented through one or more processors, such as a **processor 805** in the network node 110 depicted in Figure 8a, together with computer program code for performing the functions and actions of the embodiments herein. A processor, as used herein, may be understood to be a hardware component. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise a **memory 806** comprising one or more memory units. The memory 806 is arranged to be used to store obtained information, store data, configurations, schedulings, and applications etc. to perform the methods herein when being executed in the network node 110.

In some embodiments, the network node 110 may receive information from, e.g., the wireless device 130, through a **receiving port 807.** In some embodiments, the receiving port 807 may be, for example, connected to one or more antennas in network node 110. In other embodiments, the network node 110 may receive information from another structure in the wireless communications network 100 through the receiving port 807. Since the receiving port 807 may be in communication with the processor 805, the receiving port 807 may then send the received information to the processor 805. The receiving port 807 may also be configured to receive other information.

The processor 805 in the network node 110 may be further configured to transmit or send information to e.g., the wireless device 130, or another structure in the wireless communications network 100, through a **sending port 808,** which may be in communication with the processor 805, and the memory 806.

Those skilled in the art will also appreciate that the different units 801-804 described above may refer to a combination of analog and digital modules, and/or one or more processors configured with software and/or firmware, e.g., stored in memory, that, when executed by the one or more processors such as the processor 805, perform as described above. One or more of these processors, as well as the other digital hardware, may be included in a single Application-Specific Integrated Circuit (ASIC), or several processors and various digital hardware may be distributed among several separate components, whether individually packaged or assembled into a System-on-a-Chip (SoC).

Also, in some embodiments, the different units 801-804 described above may be implemented as one or more applications running on one or more processors such as the processor 805.

Thus, the methods according to the embodiments described herein for the network node 110 may be respectively implemented by means of a **computer program 809** product, comprising instructions, i.e., software code portions, which, when executed on at least one processor 805, cause the at least one processor 805 to carry out the actions described herein, as performed by the network node 110. The computer program 809 product may be stored on a **computer-readable storage medium 810.** The computer-readable storage medium 810, having stored thereon the computer program 809, may comprise instructions which, when executed on at least one processor 805, cause the at least one processor 805 to carry out the actions described herein, as performed by the network node 110. In some embodiments, the computer-readable storage medium 810 may be a non-transitory computer-readable storage medium, such as a CD ROM disc, or a memory stick. In other embodiments, the computer program 809 product may be stored on a carrier containing the computer program 809 just described, wherein the carrier is one of an electronic signal, optical signal, radio signal, or the computer-readable storage medium 810, as described above.

The network node 110 may comprise a communication interface configured to facilitate communications between the network node 110 and other nodes or devices, e.g., the wireless device 130. The interface may, for example, include a transceiver configured to transmit and receive radio signals over an air interface in accordance with a suitable standard.

In other embodiments, the network node 110 may comprise the following arrangement depicted in **Figure 8b.** The network node 110 may comprise a **processing circuitry 805,** e.g., one or more processors such as the processor 805, in the network node 110 and the memory 806. The network node 110 may also comprise a **radio circuitry 811,** which may comprise e.g., the receiving port 807 and the sending port 808. The processing circuitry 805 may be configured to, or operable to, perform the method actions according to Figure 3, in a similar manner as that described in relation to Figure 8a. The radio circuitry 811 may be configured to set up and maintain at least a wireless connection with the wireless device 130. Circuitry may be understood herein as a hardware component.

Hence, embodiments herein also relate to the network node 110 comprising the processing circuitry 805 and the memory 806, said memory 806 containing instructions executable by said processing circuitry 805, whereby the network node 110 is operative to perform the actions described herein in relation to the network node 110, e.g., in Figure 3.

Embodiments herein may be related to NR, NR Small Data Enhancements, MTC, IoT, and/or early data.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

As used herein, the expression "at least one of:" followed by a list of alternatives separated by commas, and wherein the last alternative is preceded by the "and" term, may be understood to mean that only one of the list of alternatives may apply, more than one of the list of alternatives may apply or all of the list of alternatives may apply. This expression may be understood to be equivalent to the expression "at least one of:" followed by a list of alternatives separated by commas, and wherein the last alternative is preceded by the "or" term.

## Examples related to embodiments herein

Several embodiments are comprised herein. It should be noted that the examples herein are not mutually exclusive. Components from one embodiment may be tacitly assumed to be present in another embodiment and it will be obvious to a person skilled in the art how those components may be used in the other exemplary embodiments.

More specifically, the following are embodiments related to a wireless device, such as the wireless device 130, e.g., a 5G UE or a UE, and embodiments related to a network node, such as the network node 110, e.g., a gNB or an eNB.

The wireless device 130 embodiments relate to **Figure 2, Figures 4-6, Figure 7** and **Figures 9-14.**

A method, performed by a wireless device, such as the wireless device 130 is described herein. The method may be understood to be for handling transmission of data to a network node, such as the network node 110. The wireless device 130 and the network node 100 may be operating in a wireless communications network, such as the wireless communications network 100.

In some examples, data may be "Small Data".

The first method may comprise one or more of the following actions.

In some embodiments, all the actions may be performed. One or more embodiments may be combined, where applicable. All possible combinations are not described to simplify the description. A non-limiting example of the method performed by the wireless device 130 is depicted in Figure 2. In Figure 2, optional actions are represented with dashed lines.

    o **Sending 205** data, e.g., first data, to the network node 110. The wireless device 130 may be configured to perform this sending action 205, e.g. by means of a **sending unit 701** within the wireless device 130, configured to perform this action.

The sending of the data, e.g., the first data in this Action 205 may be during an inactive state of the wireless device 130. The inactive state may be, e.g., as defined in 5G or in a younger system having equivalent functionality.

The first data may be user plane data.

The sending in this Action 205 may be performed according to an uplink grant received from the network node 110. That is, the sending in this Action 205 may be performed in radio-frequency resources according to the uplink grant received from the network node 110.

The sending in this Action 205 may be performed with the proviso that a size of a buffer of the wireless device 130 is smaller than a threshold. The buffer may be a buffer for transmission, which may be referred to herein as a transmit buffer.

The threshold may be a maximum size of the buffer (B$S_{max}$), e.g., a maximum transmit buffer size.

In some examples, the buffer of the wireless device 130 may be referred to as a second buffer. The second buffer may be a buffer remaining from a first buffer the wireless device 130 had prior to sending an initial transmission of second data to the network node 110 in the inactive state, the first buffer having had a first size larger than the threshold. In other words, the wireless device 130 may have initially had a set of data in its buffer having a size larger than the threshold. The set of data may have comprised the second data and the first data. First, the wireless device 130 may have sent a first subset of the set of data, that is, the second data, to the network node 110. Subsequently, the wireless device 130 may have sent a second set of the set of data, that is, the first data, to the network node 110.

Explained differently with a non-limiting example, for small data e.g. sending a sensor reading once and hour:

    1. First, the wireless device 130 has no data in the buffer,
    2. Second, data may arrive in the buffer for the wireless device 130,
    3. The wireless device 130 may initiate Small Data transmission and may include a first part, the "second data", of the data in the buffer; a BSR may be included to obtain a grant for the remaining part of the data.
    4. The wireless device 130 may then transmit the rest of the data, the "first data" in the UL grant provided based on the BSR (or multiple grants). The transmitting of the rest of the data may be performed according to Action 205.

In some examples, the threshold may be preconfigured in the wireless device 130.

The sending in this Action 205 may be performed, e.g., via the first link 141.

In some embodiments, the method may further comprise one or more of the following actions:

    o **Obtaining 201** a first indication. The wireless device 130 may be configured to perform this receiving action 201, e.g. by means of an **obtaining unit 703,** configured to perform this action.

The first indication may indicate the threshold.

Obtaining in this Action 201 may comprise, in some examples, retrieving from a memory.

In other examples, the obtaining in this Action 201 may be performed by receiving the first indication from the network node 110, e.g., via the first link 141.

    o **Obtaining 202** a set of correspondences. The wireless device 130 may be configured to perform this obtaining action 202, e.g. by means of the obtaining unit 703, configured to perform this action.

Obtaining in this Action 202 may comprise, retrieving or fetching from a memory, determining or calculating, and/or receiving, e.g., from the network node 110.

The set of correspondences may be between a set of values and a set of buffer sizes, e.g., transmit buffer sizes.

The set of correspondences may be e.g., a table, or a matrix.

The values in the set of values may be, e.g., indices.

The set of correspondences may be based on the threshold. That the set of correspondences may be based on the threshold may be understood to mean that: a) the set of values and/or the set of buffer sizes may depend on the threshold, and/or b) the set of correspondences may be constructed and/or assigned based on the threshold.

In some examples, the set of correspondences, e.g., the obtaining 202 of the set of correspondences, may be based on at least one of the following formulas, wherein the threshold is a maximum size of the buffer (B$S_{max}$):

    i. a step size of the set of correspondences is obtained as one of:

*a.* $\Delta = BS_{max}/n$, wherein n is a number of correspondences, or the number of correspondences minus one or two, and

*b.* $\Delta_i = s \times BS_i$, wherein s a fraction of a previous threshold value in the set of buffer sizes,

c. $\Delta_i = s \times BS_i$, wherein $$s = \sqrt[n]{\frac{BS_{max}}{BS_1}} - 1$$ , and

ii. each buffer size in the set of buffer sizes is obtained as one of:

a.

$$BS_i = \Delta * i,$$

b.

$$BS_i = BS_1\ 1+s^{i-1}$$

c.

$$BS_i = round(\sqrt[n]{10^i}),$$

,

d. $BS_1 = \beta + \alpha \times BS_{max}$, wherein $\alpha$ is a fraction of $BS_{max}$ and $\beta$ a constant, and

e. another function of the $BS_{max}$.

In some examples, the obtained set of correspondences may comprise duplicated values. In some of such examples, the obtaining in this Action 202 of the set of correspondences may further comprise determining a first buffer size $BS_1$ of the set of buffer sizes, and then at least one of:

- selecting the fraction s such that $s*BS_1 >= 1$, and
- shifting any the duplicates based on a determined value.

In some examples, the obtained first indication may comprise a subset of the values to be comprised in the set of correspondences. In some of such examples, the obtaining in this Action 202 of the set of correspondences may be performed within each interval defined by the obtained subset of values. In such examples, the obtaining in Action 202 may comprise determining.

In some examples, the set of buffer sizes may omit a buffer size equal to zero.

In some examples, the set of buffer sizes may align with a set of Transport Block Sizes (TBSs) configured to be used by the wireless device 130.

o **Sending 203** a second indication. The wireless device 130 may be configured to perform this sending action 203, e.g. by means of the sending unit 701 within the wireless device 130, configured to perform this action.

The sending of the second indication may be to the network node 110.

The second indication may comprise a value, e.g., a first value, selected from the set of values.

The selected value may correspond to the size of the buffer of the wireless device 130 detected, or expected to be had, during the inactive state, e.g., at a time of one or more transmissions.

The sending 203 of the second indication may be performed with the proviso that the size of the buffer is smaller than the threshold.

The sending 203 of the second indication may be performed prior to the sending 205 of the first data. For example, the sending in this Action 203 of the second indication may be performed together with the sending of the second data.

The sending 203 of the second indication may be performed prior to the sending 205 of one or more data packets comprising at least a part of the first data.

The sending in this Action 203 may be performed, e.g., via the first link 141.

In some examples, the second indication may be a Medium Access Control (MAC) Control Element (CE).

In some examples, the second indication may further comprise one of:

- a third indication indicating an amount of data the wireless device 130 may expect to exchange with the network node 110 within a future time period, and
- a fourth indication indicating a Logical Channel Group Identifier (LCGID) for which the second indication may be reported.

o **Receiving 204** the uplink grant from the network node 110. The wireless device 130 may be configured to perform this receiving action 201, e.g. by means of a **receiving unit 703,** configured to perform this action.

The receiving in this Action 204 of the uplink grant from the network node 110 may be based on the sent second indication.

The receiving in this Action 204 of the uplink grant may be performed with the proviso that the size of the buffer is smaller than the threshold.

The receiving in this Action 204 may be performed, e.g., via the first link 141.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

**Other units 704** may be comprised in the wireless device 130.

The wireless device 130 may also be configured to communicate user data with a host application unit in a host computer 1010, e.g., via another link such as 1060.

In Figure 7, optional units are indicated with dashed boxes.

The wireless device 130 may comprise an interface unit to facilitate communications between the wireless device 130 and other nodes or devices, e.g., the network node 110, the host computer 1010, or any of the other nodes. In some particular examples, the interface may, for example, include a transceiver configured to transmit and receive radio signals over an air interface in accordance with a suitable standard.

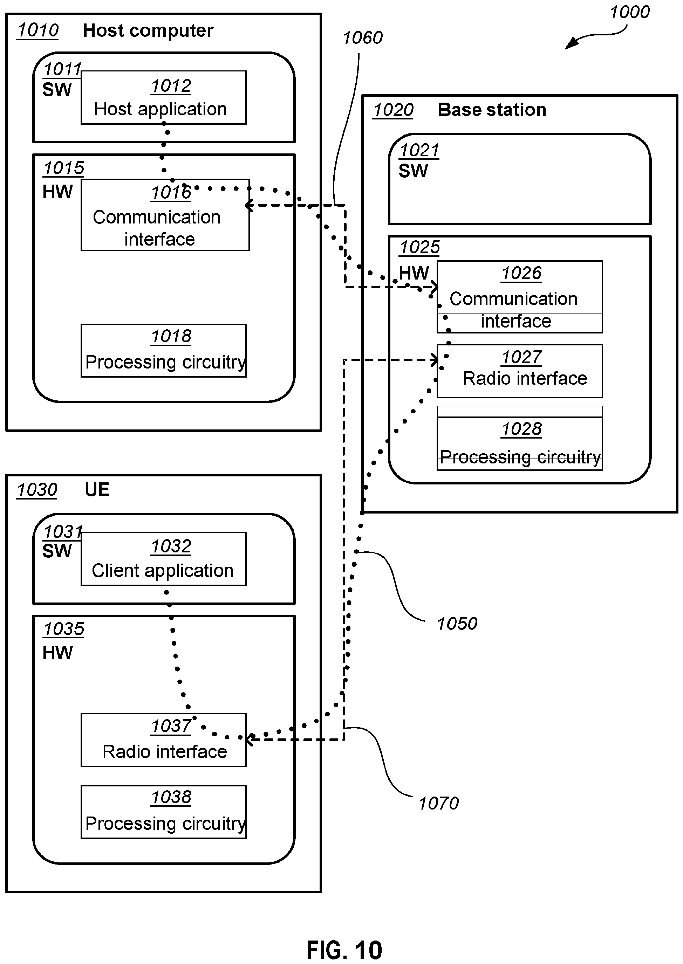

The wireless device 130 may comprise an arrangement as shown in Figure 7 or in Figure 10.

The network node 110 embodiments relate to **Figure 3, Figures 4-6, Figure 8** and **Figures 9-14.**

A method, performed by a network node, such as the network node 110 is described herein. The method may be understood to be for handling transmission of data by a wireless device, such as the wireless device 110. The wireless device 130 and the network node 100 may be operating in a wireless communications network, such as the wireless communications network 100.

In some examples, data may be "Small Data".

The method may comprise one or more of the following actions.

In some embodiments, all the actions may be performed. One or more embodiments may be combined, where applicable. All possible combinations are not described to simplify the description. A non-limiting example of the method performed by the network node 110 is depicted in Figure 3. In Figure 3, optional actions are represented with dashed lines.

The detailed description of some of the following corresponds to the same references provided above, in relation to the actions described for the wireless device 130, and will thus not be repeated here to simplify the description. For example, the set of correspondences may be, e.g., a table or a matrix.

◦ **Receiving 305** data, e.g., first data, from the wireless device 130. The network node 110 may be configured to perform this receiving action 305, e.g. by means of a **receiving unit 801** within the network node 110, configured to perform this action.

The receiving of the data, e.g., the first data in this Action 305 may be during the inactive state of the wireless device 130. The inactive state may be, e.g., as defined in 5G or in a younger system having equivalent functionality.

The first data may be user plane data.

The receiving in this Action 305 may be performed according to the uplink grant sent by the network node 110. That is, the receiving in this Action 305 may be performed in radio-frequency resources according to the uplink grant sent by the network node 110.

The receiving in this Action 305 may be performed with the proviso that the size of the buffer of the wireless device 130, which may have been previously indicated to the network node 110, is smaller than the threshold. The buffer may be a buffer for transmission, which may be referred to herein as a transmit buffer.

The threshold may be a maximum size of the buffer ($BS_{max}$), e.g., a maximum transmit buffer size.

In some examples, the buffer of the wireless device 130 may be referred to as the second buffer. The second buffer may be a buffer remaining after receiving the initial transmission of the second data from the wireless device 130, e.g., in the inactive state. A combination of the first data and the second data had the first size larger than the threshold. In other words, the wireless device 130 may have initially had the set of data in its buffer having the size larger than the threshold. The set of data may have comprised the second data and the first data. First, the network node 110 may have received the first subset of the set of data, that is, the second data, from the wireless device 130. Subsequently, the network node 110 may have received the second set of the set of data, that is, the first data, from the wireless device 130.

In some examples, the threshold may be preconfigured in the network node 110, and e.g., in the wireless device 130.

The receiving in this Action 305 may be performed, e.g., via the first link 141.

In some embodiments, the method may further comprise one or more of the following actions:

> ◦ **Sending 302** the first indication, e.g., to the wireless device 130. The network node 110 may be configured to perform this sending action 302, e.g. by means of a **sending unit 802,** configured to perform this action.

The first indication may indicate the threshold.

In other examples, the sending in this Action 302 may be performed, e.g., via the first link 141.

> ◦ **Obtaining 301** a set of correspondences. The network node 110 may be configured to perform this obtaining action 301, e.g. by means of an **obtaining unit 803,** configured to perform this action.

Obtaining in this Action 302 may comprise, retrieving or fetching from a memory, determining or calculating, and/or receiving, e.g., from another network node or from the wireless device 130.

In some examples, the set of correspondences may be preconfigured in the network node 110.

The set of correspondences may correspond to the wireless device 130.

The set of correspondences may be between a set of values and a set of buffer sizes, e.g., transmit buffer sizes.

The set of correspondences may be e.g., a table, or a matrix.

The values in the set of values may be, e.g., indices.

The set of correspondences may be based on the threshold. That the set of correspondences may be based on the threshold may be understood to mean that: a) the set of values and/or the set of buffer sizes may depend on the threshold, and/or b) the set of correspondences may be constructed and/or assigned based on the threshold.

In some examples, the set of correspondences, e.g., the obtaining 301 of the set of correspondences, may be based on at least one of the following formulas, wherein the threshold is a maximum size of the buffer ($BS_{max}$):

> i. a step size of the set of correspondences is obtained as one of:

> > a. $\Delta = BS_{max}/n,$ wherein n is a number of correspondences, or the number of correspondences minus one or two, and
> > b. $\Delta_i = s \times BS_i,$ wherein s a fraction of a previous threshold value in the set of buffer sizes,
> > c. $\Delta_i = s \times BS_i,$ wherein $s = \sqrt[n]{\dfrac{BS_{max}}{BS_1}} - 1$ , and

> ii. each buffer size in the set of buffer sizes is obtained as one of:

> > a.

$$BS_i = \Delta * i,$$

> > b.

$$BS_i = BS_1\, 1+s^{i-1}$$

> > c.

$$BS_i = round(\sqrt[n]{10^i}),$$

d. $BS_1 = \beta + \alpha \times BS_{max}$, wherein $\alpha$ is a fraction of $BS_{max}$ and $\beta$ a constant, and
e. another function of the $BS_{max}$.

In some examples, the set of correspondences, e.g., the obtained set of correspondences may comprise duplicated values. In some of such examples, the obtaining in this Action 301 of the set of correspondences may further comprise determining a first buffer size $BS_1$ of the set of buffer sizes, and then at least one of:

- selecting the fraction s such that $s*BS_1 >= 1$, and
- shifting any the duplicates based on a determined value.

In some examples, the sent first indication may comprise a subset of the values to be comprised in the set of correspondences. In some of such examples, the obtaining in this Action 301 of the set of correspondences may be performed within each interval defined by the obtained subset of values. In such examples, the obtaining in Action 301 may comprise determining.

In some examples, the set of buffer sizes may omit a buffer size equal to zero.

In some examples, the set of buffer sizes may align with a set of Transport Block Sizes (TBSs) configured to be used by the wireless device 130.

In some examples, the first indication may further indicate the set of correspondences.

○ **Receiving 303** the second indication. The network node 110 may be configured to perform this sending action 303, e.g. by means of the receiving unit 801 within the network node 110, configured to perform this action.

The receiving of the second indication may be from the wireless device 130.

The second indication may comprise the value, e.g., the first value, from the set of values. The value comprised in the second indication may be comprised in the set of values in the obtained set of correspondences.

The value may correspond to the size of the buffer of the wireless device 130 detected, or expected to be had, during the inactive state of the wireless device 130, e.g., at a time of one or more transmissions.

The receiving in this Action 303 of the second indication may be performed with the proviso that the size of the buffer is smaller than the threshold.

The receiving in this Action 303 of the second indication may be performed prior to the receiving in Action 305 of the first data. For example, the receiving in this Action 303 of the second indication may be performed together with the receiving of the second data.

The receiving 303 of the second indication may be performed prior to the receiving 305 of the one or more data packets comprising at least a part of the first data.

The receiving in this Action 303 may be performed, e.g., via the first link 141.

In some examples, the second indication may be a Medium Access Control (MAC) Control Element (CE).

In some examples, the second indication may further comprise one of:

- the third indication indicating the amount of data the wireless device 130 may expect to exchange with the network node 110 within the future time period, and
- the fourth indication indicating the Logical Channel Group Identifier (LCGID) for which the second indication may be reported.

○ **Sending 304** the uplink grant to the wireless device 130. The network node 110 may be configured to perform this sending action 304, e.g. by means of the sending unit 802, configured to perform this action.

The sending in this Action 304 of the uplink grant from the network node 110 may be based on the received second indication.

The sending in this Action 304 of the uplink grant may be performed with the proviso that the size of the buffer is smaller than the threshold.

The sending in this Action 304 may be performed, e.g., via the first link 141.

In some embodiments, the wireless communications network 100 may support at least one of: New Radio (NR), Long Term Evolution (LTE), LTE for Machines (LTE-M), enhanced Machine Type Communication (eMTC), and Narrow Band Internet of Things (NB-IoT).

**Other units 804** may be comprised in the network node 110.

The network node 110 may also be configured to communicate user data with a host application unit in a host computer 1010, e.g., via another link such as 1060.

In Figure 8, optional units are indicated with dashed boxes.

The network node 110 may comprise an interface unit to facilitate communications between the network node 110 and other nodes or devices, e.g., the wireless device 130, the host computer 1010, or any of the other nodes. In some particular examples, the interface may, for example, include a transceiver configured to transmit and receive radio signals over an air interface in accordance with a suitable standard.

The network node 110 may comprise an arrangement as shown in Figure 8 or in Figure 10.

**Further Extensions And Variations**

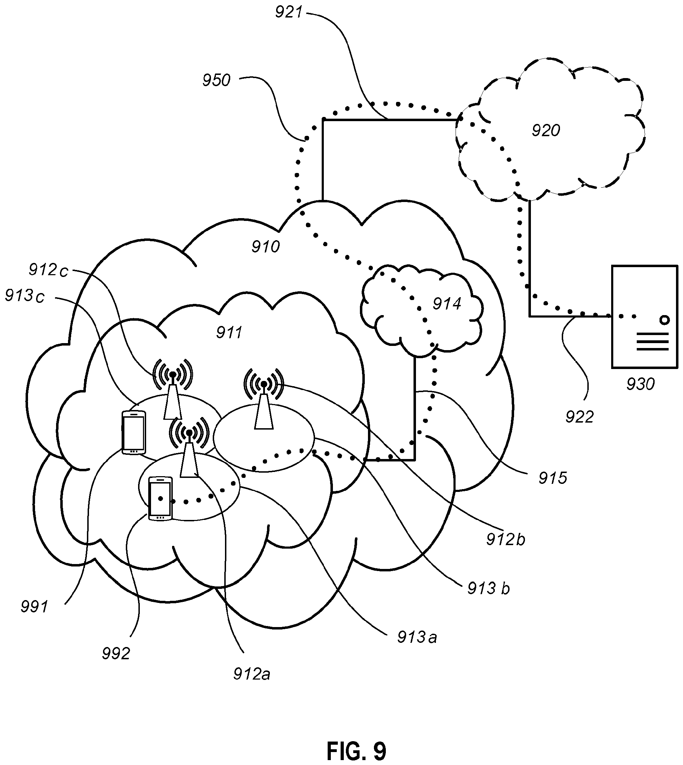

**Figure 9:** Telecommunication network connected via an intermediate network to a host computer in accordance with some embodiments

With reference to Figure 9, in accordance with an embodiment, a communication system includes telecommunication network 910 such as the wireless communications network 100, for example, a 3GPP-type cellular network, which comprises access network 911, such as a radio access network, and core network 914. Access network 911 comprises a plurality of network nodes such as the network node 110. For example, base stations 912a, 912b, 912c, such as NBs, eNBs, gNBs or other types of wireless access points, each defining a corresponding coverage area 913a, 913b, 913c. Each base station 912a, 912b, 912c is connectable to core network 914 over a wired or wireless connection 915. A plurality of user equipments, such as the wireless device 130 are comprised in the wireless communications network 100. In Figure 9, a first UE 991 located in coverage area 913c is configured to wirelessly connect to, or be paged by, the corresponding base station 912c. A second UE 992 in coverage area 913a is wirelessly connectable to the corresponding base station 912a. While a plurality of UEs 991, 992 are illustrated in this example, the disclosed embodiments are equally applicable to a situation where a sole UE is in the coverage area or where a sole UE is connecting to the corresponding base station 912. Any of the UEs 991, 992 are examples of the wireless device 130.

Telecommunication network 910 is itself connected to host computer 930, which may be embodied in the hardware and/or software of a standalone server, a cloud-implemented server, a distributed server or as processing resources in a server farm. Host computer 930 may be under the ownership or control of a service provider, or may be operated by the service provider or on behalf of the service provider. Connections 921 and 922 between telecommunication network 910 and host computer 930 may extend directly from core network 914 to host computer 930 or may go via an optional intermediate network 920. Intermediate network 920 may be one of, or a combination of more than one of, a public, private or hosted network; intermediate network 920, if any, may be a backbone network or the Internet; in particular, intermediate network 920 may comprise two or more sub-networks (not shown).

The communication system of Figure 9 as a whole enables connectivity between the connected UEs 991, 992 and host computer 930. The connectivity may be described as an over-the-top (OTT) connection 950. Host computer 930 and the connected UEs 991, 992 are configured to communicate data and/or signaling via OTT connection 950, using access network 911, core network 914, any intermediate network 920 and possible further infrastructure (not shown) as intermediaries. OTT connection 950 may be transparent in the sense that the participating communication devices through which OTT connection 950 passes are unaware of routing of uplink and downlink communications. For example, base station 912 may not or need not be informed about the past routing of an incoming downlink communication with data originating from host computer 930 to be forwarded (e.g., handed over) to a connected UE 991. Similarly, base station 912 need not be aware of the future routing of an outgoing uplink communication originating from the UE 991 towards the host computer 930.

In relation to Figures 10, 11, 12, 13, and 14, which are described next, it may be understood that a UE is an example of the wireless device 130, and that any description provided for the UE equally applies to the wireless device 130. It may be also understood that the base station is an example of the network node 110, and that any description provided for the base station equally applies to the network node 110.

**Figure 10**: Host computer communicating via a base station with a user equipment over a partially wireless connection in accordance with some embodiments

Example implementations, in accordance with an embodiment, of the wireless device 130, e.g., a UE, the network node 110, e.g., a base station and host computer discussed in the preceding paragraphs will now be described with reference to Figure 10. In communication system 1000, such as the wireless communications network 100, host computer 1010 comprises hardware 1015 including communication interface 1016 configured to set up and maintain a wired or wireless connection with an interface of a different communication device of communication system 1000. Host computer 1010 further comprises processing circuitry 1018, which may have storage and/or processing capabilities. In particular, processing circuitry 1018 may comprise one or more programmable processors, application-specific integrated circuits, field programmable gate arrays or combinations of these (not shown) adapted to execute instructions. Host computer 1010 further comprises software 1011, which is stored in or accessible by host computer 1010 and executable by processing circuitry 1018. Software 1011 includes host application 1012. Host application 1012 may be operable to provide a service to a remote user, such as UE 1030 connecting via OTT connection 1050 terminating at UE 1030 and host computer 1010. In providing the service to the remote user, host application 1012 may provide user data which is transmitted using OTT connection 1050.

Communication system 1000 further includes the network node 110, exemplified in Figure 10 as a base station 1020 provided in a telecommunication system and comprising hardware 1025 enabling it to communicate with host computer 1010 and with UE 1030. Hardware 1025 may include communication interface 1026 for setting up and maintaining a wired or wireless connection with an interface of a different communication device of communication system 1000, as well as radio interface 1027 for setting up and maintaining at least wireless connection 1070 with the wireless device 130, exemplified in Figure 10 as a UE 1030 located in a coverage area (not shown in Figure 10) served by base station 1020. Communication interface 1026 may be configured to facilitate connection 1060 to host computer 1010. Connection 1060 may be direct or it may pass through a core network (not shown in Figure 10) of the telecommunication system and/or through one or more intermediate networks outside the telecommunication system. In the embodiment shown, hardware 1025 of base station 1020 further includes processing circuitry 1028, which may comprise one or more programmable processors, application-specific integrated circuits, field programmable gate arrays or combinations of these (not shown) adapted to execute instructions. Base station 1020 further has software 1021 stored internally or accessible via an external connection.

Communication system 1000 further includes UE 1030 already referred to. Its hardware 1035 may include radio interface 1037 configured to set up and maintain wireless connection 1070 with a base station serving a coverage area in which UE 1030 is currently located. Hardware 1035 of UE 1030 further includes processing circuitry 1038, which may comprise one or more programmable processors, application-specific integrated circuits, field programmable gate arrays or combinations of these (not shown) adapted to execute instructions. UE 1030 further comprises software 1031, which is stored in or accessible by UE 1030 and executable by processing circuitry 1038. Software 1031 includes client application 1032. Client application 1032 may be operable to provide a service to a human or non-human user via UE 1030, with the support of host computer 1010. In host computer 1010, an executing host application 1012 may communicate with the executing client application 1032 via OTT connection 1050 terminating at UE 1030 and host computer 1010. In providing the service to the user, client application 1032 may receive request data from host application 1012 and provide user data in response to the request data. OTT connection 1050 may transfer both the request data and the user data. Client application 1032 may interact with the user to generate the user data that it provides.

It is noted that host computer 1010, base station 1020 and UE 1030 illustrated in Figure 10 may be similar or identical to host computer 930, one of base stations 912a, 912b, 912c and one of UEs 991, 992 of Figure 9, respectively. This is to say, the inner workings of these entities may be as shown in Figure 10 and independently, the surrounding network topology may be that of Figure 9.

In Figure 10, OTT connection 1050 has been drawn abstractly to illustrate the communication between host computer 1010 and UE 1030 via base station 1020, without explicit reference to any intermediary devices and the precise routing of messages via these devices. Network infrastructure may determine the routing, which it may be configured to hide from UE 1030 or from the service provider operating host computer 1010, or both. While OTT connection 1050 is active, the network infrastructure may further take decisions by which it dynamically changes the routing (e.g., on the basis of load balancing consideration or reconfiguration of the network).

Wireless connection 1070 between UE 1030 and base station 1020 is in accordance with the teachings of the embodiments described throughout this disclosure. One or more of the various embodiments improve the performance of OTT services provided to UE 1030 using OTT connection 1050, in which wireless connection 1070 forms the last segment. More precisely, the teachings of these embodiments may improve the latency, signalling overhead, and service interruption and thereby provide benefits such as reduced user waiting time, better responsiveness and extended battery lifetime.

A measurement procedure may be provided for the purpose of monitoring data rate, latency and other factors on which the one or more embodiments improve. There may further be an optional network functionality for reconfiguring OTT connection 1050 between host computer 1010 and UE 1030, in response to variations in the measurement results. The measurement procedure and/or the network functionality for reconfiguring OTT connection 1050 may be implemented in software 1011 and hardware 1015 of host computer 1010 or in software 1031 and hardware 1035 of UE 1030, or both. In embodiments, sensors (not shown) may be deployed in or in association with communication devices through which OTT connection 1050 passes; the sensors may participate in the measurement procedure by supplying values of the monitored quantities exemplified above, or supplying values of other physical quantities from which software 1011, 1031 may compute or estimate the monitored quantities. The reconfiguring of OTT connection 1050 may include message format, retransmission settings, preferred routing etc.; the reconfiguring need not affect base station 1020, and it may be unknown or imperceptible to base station 1020. Such procedures and functionalities may be known and practiced in the art. In certain embodiments, measurements may involve proprietary UE signaling facilitating host computer 1010's measurements of throughput, propagation times, latency and the like. The measurements may be implemented in that software 1011 and 1031 causes messages to be transmitted, in particular empty or 'dummy' messages, using OTT connection 1050 while it monitors propagation times, errors etc.

The wireless device 130 embodiments relate to **Figure 2**, **Figures 4-6**, **Figure 7** and **Figures 9-14**.

The wireless device 130 may comprise an interface unit to facilitate communications between the wireless device 130 and other nodes or devices, e.g., the network node 110, the host computer 1010, or any of the other nodes. In some particular examples, the interface may, for example, include a transceiver configured to transmit and receive radio signals over an air interface in accordance with a suitable standard.

The wireless device 130 may comprise an arrangement as shown in Figure 7 or in Figure 10.

The wireless device 130 may also be configured to communicate user data with a host application unit in a host computer 1010, e.g., via another link such as 1060.

The network node 110 embodiments relate to **Figure 3**, **Figures 4-6, Figure 8** and **Figures 9-14**.

The network node 110 may comprise an interface unit to facilitate communications between the network node 110 and other nodes or devices, e.g., the wireless device 130, the host computer 1010, or any of the other nodes. In some particular examples, the interface may, for example, include a transceiver configured to transmit and receive radio signals over an air interface in accordance with a suitable standard.

The network node 110 may comprise an arrangement as shown in Figure 8 or in Figure 10.

The network node 110 may also be configured to communicate user data with a host application unit in a host computer 1010, e.g., via another link such as 1060.

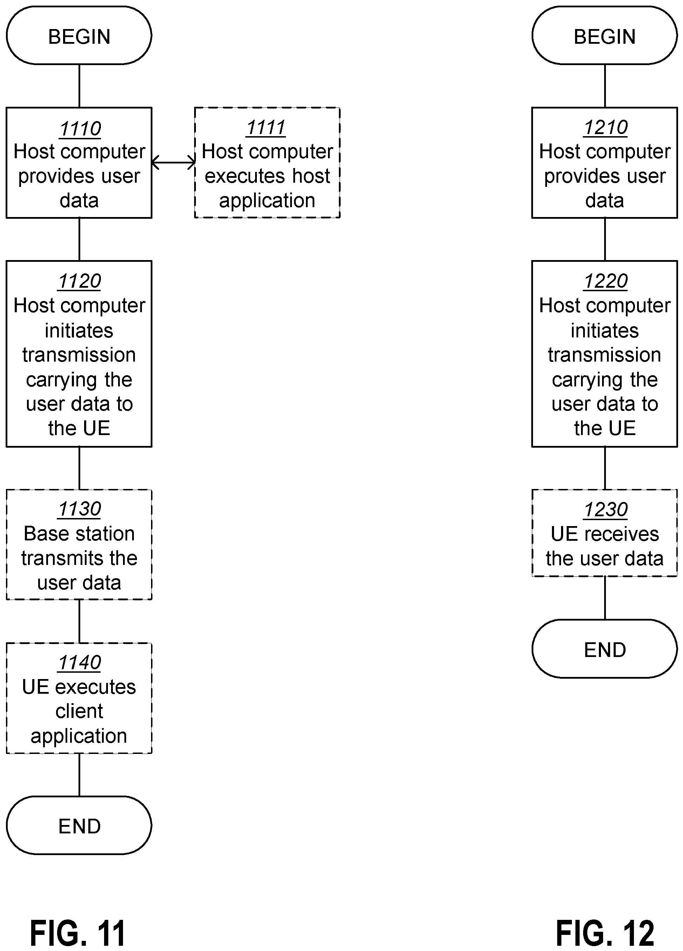

**Figure 11:** Methods implemented in a communication system including a host computer, a base station and a user equipment in accordance with some embodiments

Figure 11 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 11 will be included in this section. In step 1110, the host computer provides user data. In substep 1111 (which may be optional) of step 1110, the host computer provides the user data by executing a host application. In step 1120, the host computer initiates a transmission carrying the user data to the UE. In step 1130 (which may be optional), the base station transmits to the UE the user data which was carried in the transmission that the host computer initiated, in accordance with the teachings of the embodiments described throughout this disclosure. In step 1140 (which may also be optional), the UE executes a client application associated with the host application executed by the host computer.

Figure 12: Methods implemented in a communication system including a host computer, a base station and a user equipment in accordance with some embodiments

Figure 12 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 12 will be included in this section. In step 1210 of the method, the host computer provides user data. In an optional substep (not shown) the host computer provides the user data by executing a host application. In step 1220, the host computer initiates a transmission carrying the user data to the UE. The transmission may pass via the base station, in accordance with the teachings of the embodiments described throughout this disclosure. In step 1230 (which may be optional), the UE receives the user data carried in the transmission.

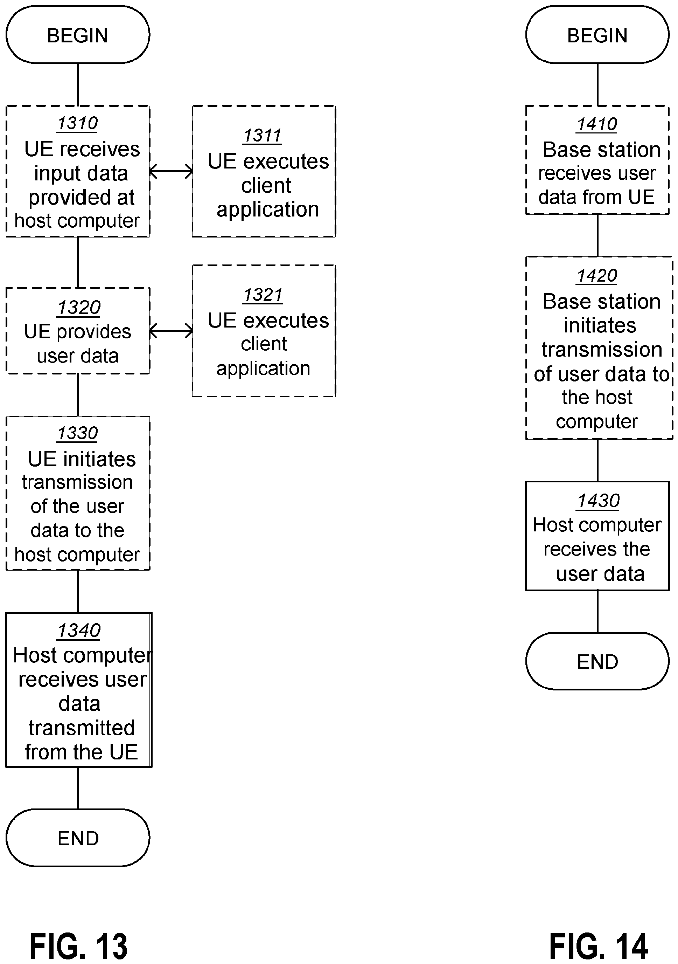

**Figure 13**: Methods implemented in a communication system including a host computer, a base station and a user equipment in accordance with some embodiments

Figure 13 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 13 will be included in this section. In step 1310 (which may be optional), the UE receives input data provided by the host computer. Additionally or alternatively, in step 1320, the UE provides user data. In substep 1321 (which may be optional) of step 1320, the UE provides the user data by executing a client application. In substep 1311 (which may be optional) of step 1310, the UE executes a client application which provides the user data in reaction to the received input data provided by the host computer. In providing the user data, the executed client application may further consider user input received from the user. Regardless of the specific manner in which the user data was provided, the UE initiates, in substep 1330 (which may be optional), transmission of the user data to the host computer. In step 1340 of the method, the host computer receives the user data transmitted from the UE, in accordance with the teachings of the embodiments described throughout this disclosure.

**Figure 14:** Methods implemented in a communication system including a host computer, a base station and a user equipment in accordance with some embodiments

Figure 14 is a flowchart illustrating a method implemented in a communication system, in accordance with one embodiment. The communication system includes a host computer, a base station and a UE which may be those described with reference to Figures 9 and 10. For simplicity of the present disclosure, only drawing references to Figure 14 will be included in this section. In step 1410 (which may be optional), in accordance with the teachings of the embodiments described throughout this disclosure, the base station receives user data from the UE. In step 1420 (which may be optional), the base station initiates transmission of the received user data to the host computer. In step 1430 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

**Claims**

1.  A method performed by a wireless device (130), the method being for handling transmission of data to a network node (110), the wireless device (130) and the network node (110) operating in the wireless communications network (100), the method comprising:

    - *sending* (203) an indication to the network node (110), the indication comprising a value selected from a set of values, the selected value corresponding to a size of a buffer of the wireless device (130) detected or expected to be had during an inactive state at a time of one or more transmissions, wherein the sending (203) of the indication is performed with the proviso that the size of the buffer is smaller than a threshold,
    - *receiving* (204) an uplink grant from the network node (110), based on the sent indication, and
    - *sending* (205) first data to the network node (110) during the inactive state of the wireless device (130), wherein the first data is user plane data, wherein the sending (205) of the first data is performed according to the uplink grant received from the network node (110), and wherein the sending (205) of the first data is performed with the proviso that the size of the buffer of the wireless device (130) is smaller than the threshold, the buffer being a buffer for transmission, wherein the sending (203) of the indication is performed prior to the sending (205) of one or more data packets comprising at least a part of the first data.

2.  The method according to claim 1, wherein the buffer of the wireless device (130) is a second buffer remaining from a first buffer the wireless device (130) had prior to sending an initial transmission of second data to the network node (110) in the inactive state, the first buffer having had a first size larger than the threshold.

3.  The method according to any of claims 1-2, wherein the threshold is preconfigured in the wireless device (130).

4.  The method according to any of claims 1-2, wherein the indication is a second indication, and wherein the method further comprises:

    - *obtaining* (201) a first indication from the network node (110), the first indication indicating the threshold.

**5.** The method according to any of claims 1-4, wherein the method further comprises:

- *obtaining* (202) a set of correspondences between the set of values and a set of buffer sizes, the set of correspondences being based on the threshold.

**6.** The method according to claim 5, wherein the obtaining (202) of the set of correspondences is based on at least one of the following formulas, wherein the threshold is a maximum size of the buffer ($BS_{max}$):

*i.* a step size of the set of correspondences is obtained as one of:

a. $\Delta = BS_{max} / n$, wherein n is a number of correspondences, or the number of correspondences minus one or two, and

b. $\Delta_i = s \times BS_{i,}$, wherein s is a fraction of a previous threshold value in the set of buffer sizes, and

c. $\Delta_i = s \times BS_{i,}$, wherein $s = \sqrt[n]{\dfrac{BS_{max}}{BS_1}} - 1$, and

ii. each buffer size in the set of buffer sizes is obtained as one of:

a.

$$BS_i = \Delta * i,$$

b.

$$BS_i = BS_1 \, (1+s)^{i-1}$$

c.

$$BS_i = round(\sqrt[n]{10^i}),$$

d. $BS_1 = \beta + \alpha \times BS_{max}$, wherein $\alpha$ is a fraction of $BS_{max}$ and $\beta$ is a constant, and
e. another function of the $BS_{max}$.

**7.** The method according to claim 6, wherein the obtained set of correspondences comprises duplicated values, and wherein the obtaining (202) of the set of correspondences further comprises determining a first buffer size ($BS_1$) of the set of buffer sizes, and then at least one of:

- selecting the fraction s such that $s*BS_1 >= 1$, and
- shifting any of the duplicates based on a determined value.

**8.** The method according to claim 4 and any of claims 5-7, wherein the obtained first indication comprises a subset of the values to be comprised in the set of correspondences, and wherein the obtaining (202) of the set of correspondences is performed within each interval defined by the obtained subset of values.

**9.** The method according to any of claims 5-8, wherein at least one of:

- the set of buffer sizes omits a buffer size equal to zero, and
- the set of buffer sizes aligns with a set of Transport Block Sizes configured to be used by the wireless device (130).

**10.** The method according to any of claims 1-9, wherein the indication is a second indication, and wherein the second indication is a Medium Access Control Control Element, MAC CE.

**11.** The method according to claims 1-10, wherein the indication is a second indication, and wherein the second indication further comprises one of:

- a third indication indicating an amount of data the wireless device (130) expects to exchange with the network node (110) within a future time period, and
- a fourth indication indicating a Logical Channel Group Identifier, LCGID, for which the second indication is reported.

12. A wireless device (130), for handling transmission of data to a network node (110), the wireless device (130) and the network node (110) being configured to operate in a wireless communications network (100), the wireless device (130) being further configured to:

- send an indication to the network node (110), the indication being configured to comprise a value configured to be selected from a set of values, the selected value being configured to correspond to a size of a buffer of the wireless device (130) configured to be detected or expected to be had during an inactive state at a time of one or more transmissions, wherein the sending of the indication is configured to be performed with the proviso that the size of the buffer is smaller than a threshold,
- receive an uplink grant from the network node (110), based on the indication configured to be sent, and
- send first data to the network node (110) during the inactive state of the wireless device (130), wherein the first data is configured to be user plane data, wherein the sending of the first data is configured to be performed according to the uplink grant configured to be received from the network node (110), and wherein the sending of the first data is configured to be performed with the proviso that the size of the buffer of the wireless device (130) is smaller than the threshold, the buffer being configured to be a buffer for transmission, wherein the sending of the indication is configured to be performed prior to the sending of one or more data packets comprising at least a part of the first data.

13. The wireless device (130) according to claim 12, wherein the buffer of the wireless device (130) is configured to be a second buffer remaining from a first buffer the wireless device (130) had prior to sending an initial transmission of second data to the network node (110) in the inactive state, the first buffer being configured to have had a first size larger than the threshold.

14. The wireless device (130) according to any of claims 12-13, wherein the threshold is preconfigured in the wireless device (130).

15. The wireless device (130) according to any of claims 12-13, wherein the indication is a configured to be second indication, and wherein the wireless device (130) is further configured to:

- obtain a first indication from the network node (110), the first indication being configured to indicate the threshold.

16. The wireless device (130) according to any of claims 12-15, wherein the wireless device (130) further configured to:

- obtain a set of correspondences between the set of values and a set of buffer sizes, the set of correspondences being configured to be based on the threshold.

17. The wireless device (130) according to claim 16, wherein the obtaining of the set of correspondences is configured to be based on at least one of the following formulas, wherein the threshold is configured to be a maximum size of the buffer ($BS_{max}$):

i. a step size of the set of correspondences is configured to be obtained as one of:

a. $\Delta = BS_{max}/n$, wherein n is configured to be a number of correspondences, or the number of correspondences minus one or two, and
b. $\Delta_i = s \times BS_i$, wherein s is configured to be a fraction of a previous threshold value in the set of buffer sizes, and

c. $\Delta_i = s \times BS_i$, wherein $s = \sqrt[n]{\dfrac{BS_{max}}{BS_1}} - 1$, and

ii. each buffer size in the set of buffer sizes is configured to be obtained as one of:

   a.

$$BS_i = \Delta * i,$$

   b.

$$BS_i = BS_1 (1+s)^{i-1}$$

   c.

$$BS_i = \text{round}(\sqrt[n]{10^i}),$$

d. $BS_1 = \beta + \alpha \times BS_{max}$, wherein $\alpha$ is configured to be a fraction of $BS_{max}$ and $\beta$ is configured to be a constant , and
e. another function of the $BS_{max}$.

18. The wireless device (130) according to claim 17, wherein the set of correspondences configured to be obtained is configured to comprise duplicated values, and wherein the obtaining of the set of correspondences is further configured to comprise determining a first buffer size ($BS_1$ ) of the set of buffer sizes, and then at least one of:

   - selecting the fraction s such that $s*BS_1 >= 1$, and
   - shifting any of the duplicates based on a determined value.

19. The wireless device (130) according to claim 15 and any of claims 16-18, wherein the first indication configured to be obtained is configured to comprise a subset of the values to be configured to be comprised in the set of correspondences, and wherein the obtaining of the set of correspondences is configured to be performed within each interval configured to be defined by the subset of values configured to be obtained.

20. The wireless device (130) according to any of claims 15-19, wherein at least one of:

   - the set of buffer sizes is configured to omit a buffer size equal to zero, and
   - the set of buffer sizes is configured to align with a set of Transport Block Sizes configured to be used by the wireless device (130).

21. The wireless device (130) according to any of claims 12-20, wherein the indication is configured to be a second indication, and wherein the second indication is configured to be a Medium Access Control Control Element, MAC CE.

22. The wireless device (130) according to claims 12-21, wherein the indication is configured to be a second indication, and wherein the second indication is further configured to comprise one of:

   - a third indication configured to indicate an amount of data the wireless device (130) expects to exchange with the network node (110) within a future time period, and
   - a fourth indication configured to indicate a Logical Channel Group Identifier, LCGID, for which the second indication is configured to be reported.

**Patentansprüche**

1. Verfahren, das von einer drahtlosen Vorrichtung (130) durchgeführt wird, wobei das Verfahren zum Handhaben von Übertragung von Daten an einen Netzwerkknoten (110) dient, wobei die drahtlose Vorrichtung (130) und der Netzwerkknoten (110) in dem drahtlosen Kommunikationsnetzwerk (100) arbeiten, das Verfahren umfassend:

   - *Senden* (203) einer Angabe an den Netzwerkknoten (110), wobei die Angabe einen Wert umfasst, der aus einem Satz von Werten ausgewählt ist, wobei der ausgewählte Wert einer Größe eines Puffers der drahtlosen Vorrichtung (130) entspricht, die erfasst wird oder von der erwartet wird, dass er sie während eines inaktiven Zustands zu einem Zeitpunkt einer oder mehrerer Übertragungen aufweist, wobei das Senden (203) der Angabe mit der Vorgabe durchgeführt wird, dass die Größe des Puffers kleiner als ein Schwellenwert ist,
- *Empfangen* (204) einer Uplink-Bewilligung von dem Netzwerkknoten (110), basierend auf der gesendeten Angabe, und
- *Senden* (205) erster Daten an den Netzwerkknoten (110) während des inaktiven Zustands der drahtlosen Vorrichtung (130), wobei die ersten Daten Anwenderebenendaten sind, wobei das Senden (205) der ersten Daten gemäß der Uplink-Bewilligung durchgeführt wird, die von dem Netzwerkknoten (110) empfangen wird, und wobei das Senden (205) der ersten Daten mit der Vorgabe durchgeführt wird, dass die Größe des Puffers der drahtlosen Vorrichtung (130) kleiner als der Schwellenwert ist, wobei der Puffer ein Puffer zur Übertragung ist, wobei das Senden (203) der Angabe vor dem Senden (205) eines oder mehrerer Datenpakete durchgeführt wird, die mindestens einen Teil der ersten Daten umfassen.

2. Verfahren nach Anspruch 1, wobei der Puffer der drahtlosen Vorrichtung (130) ein zweiter Puffer ist, der von einem ersten Puffer verbleibt, den die drahtlose Vorrichtung (130) vor Senden einer initialen Übertragung zweiter Daten an den Netzwerkknoten (110) in dem inaktiven Zustand aufgewiesen hat, wobei der erste Puffer eine erste Größe aufgewiesen hat, die größer als der Schwellenwert ist.

3. Verfahren nach einem der Ansprüche 1-2, wobei der Schwellenwert in der drahtlosen Vorrichtung (130) vorkonfiguriert ist.

4. Verfahren nach einem der Ansprüche 1-2, wobei die Angabe eine zweite Angabe ist und wobei das Verfahren weiter umfasst:

   - *Erhalten* (201) einer ersten Angabe von dem Netzwerkknoten (110), wobei die erste Angabe den Schwellenwert angibt.

5. Verfahren nach einem der Ansprüche 1-4, wobei das Verfahren weiter umfasst:

   - *Erhalten* (202) eines Satzes von Übereinstimmungen zwischen dem Satz von Werten und einem Satz von Puffergrößen, wobei der Satz von Übereinstimmungen auf dem Schwellenwert basiert.

6. Verfahren nach Anspruch 5, wobei das Erhalten (202) des Satzes von Übereinstimmungen auf mindestens einer der folgenden Formeln basiert, wobei der Schwellenwert eine maximale Größe des Puffers ($BS_{max}$) ist:

   i. eine Schrittgröße des Satzes von Übereinstimmungen wird als eines erhalten von:

   a. $\Delta = BS_{max}/n$, wobei n eine Anzahl von Übereinstimmungen oder die Anzahl von Übereinstimmungen minus eins oder zwei ist, und
   b. $\Delta_i = s \times BS_i$, wobei s ein Bruchteil eines vorigen Schwellenwerts in dem Satz von Puffergrößen ist, und
   c. $\Delta_i = s \times BS_i$, wobei $s = \sqrt[n]{\dfrac{BS_{max}}{BS_1}} - 1$ ist, und

   ii. jede Puffergröße in dem Satz von Puffergrößen wird als eines erhalten von:

   a.

   $$BS_i = \Delta * i,$$

   b.

   $$BS_i = BS_1(1+s)^{i-1}$$

   c.

$$BS_i = round(\sqrt[n]{10^i}),$$

,

d. $BS_1 = \beta + \alpha \times BS_{max}$, wobei $\alpha$ ein Bruchteil von $BS_{max}$ ist und $\beta$ eine Konstante ist, und
e. eine weitere Funktion des $BS_{max}$.

7.  Verfahren nach Anspruch 6, wobei der erhaltene Satz von Übereinstimmungen duplizierte Werte umfasst und wobei das Erhalten (202) des Satzes von Übereinstimmungen weiter Bestimmen einer ersten Puffergröße ($BS_1$) des Satzes von Puffergrößen und dann mindestens eines der Folgenden umfasst:

    - Auswählen des Bruchteils s, so dass $s*BS_1 >= 1$, und
    - Verschieben jeglicher Duplikate basierend auf einem bestimmten Wert.

8.  Verfahren nach Anspruch 4 und einem der Ansprüche 5-7, wobei die erhaltene erste Angabe einen Teilsatz der Werte umfasst, die in dem Satz von Übereinstimmungen umfasst sein sollen, und wobei das Erhalten (202) des Satzes von Übereinstimmungen innerhalb jedes Intervalls durchgeführt wird, das von dem erhaltenen Teilsatz von Werten definiert wird.

9.  Verfahren nach einem der Ansprüche 5-8, wobei mindestens eines der Folgenden zutrifft:

    - der Satz von Puffergrößen lässt eine Puffergröße gleich null aus, und
    - der Satz von Puffergrößen richtet sich nach einem Satz von Transportblockgrößen, der dazu konfiguriert ist, von der drahtlosen Vorrichtung (130) verwendet zu werden.

10. Verfahren nach einem der Ansprüche 1-9, wobei die Angabe eine zweite Angabe ist und wobei die zweite Angabe ein Medienzugangssteuerungs-Steuerelement, MAC CE (Medium Access Control Control Element), ist.

11. Verfahren nach den Ansprüchen 1-10, wobei die Angabe eine zweite Angabe ist und wobei die zweite Angabe weiter eines umfasst von:

    - einer dritten Angabe, die eine Menge an Daten angibt, die die drahtlose Vorrichtung (130) erwartet, mit dem Netzwerkknoten (110) innerhalb einer zukünftigen Zeitperiode auszutauschen, und
    - eine vierte Angabe, die eine logische Kanalgruppenkennung, LCGID (Logical Channel Group Identifier), angibt, für die die zweite Angabe angemeldet ist.

12. Drahtlose Vorrichtung (130) zum Handhaben von Übertragung von Daten an einen Netzwerkknoten (110), wobei die drahtlose Vorrichtung (130) und der Netzwerkknoten (110) konfiguriert sind, in einem drahtlosen Kommunikationsnetzwerk (100) zu arbeiten, wobei die drahtlose Vorrichtung (130) weiter konfiguriert ist zum:

    - Senden einer Angabe an den Netzwerkknoten (110), wobei die Angabe konfiguriert ist, einen Wert zu umfassen, der konfiguriert ist, aus einem Satz von Werten ausgewählt zu werden, wobei der ausgewählte Wert konfiguriert ist, einer Größe eines Puffers der drahtlosen Vorrichtung (130) zu entsprechen, die konfiguriert ist erfasst zu werden, oder von der erwartet wird, dass er sie während eines inaktiven Zustands zu einem Zeitpunkt einer oder mehrerer Übertragungen aufweist, wobei das Senden der Angabe konfiguriert ist, mit der Vorgabe durchgeführt zu werden, dass die Größe des Puffers kleiner als ein Schwellenwert ist,
    - Empfangen einer Uplink-Bewilligung von dem Netzwerkknoten (110), basierend auf der Angabe, die konfiguriert ist, gesendet zu werden, und
    - Senden erster Daten an den Netzwerkknoten (110) während des inaktiven Zustands der drahtlosen Vorrichtung (130), wobei die ersten Daten konfiguriert sind, Benutzerebenendaten zu sein, wobei das Senden der ersten Daten konfiguriert ist, gemäß der Uplink-Bewilligung durchgeführt zu werden, die konfiguriert ist, von dem Netzwerkknoten (110) empfangen zu werden, und wobei das Senden der ersten Daten konfiguriert ist, mit der Vorgabe durchgeführt zu werden, dass die Größe des Puffers der drahtlosen Vorrichtung (130) kleiner als der Schwellenwert ist, wobei der Puffer konfiguriert ist, ein Puffer zur Übertragung zu sein, wobei das Senden der Angabe konfiguriert ist, vor dem Senden eines oder mehrerer Datenpakete durchgeführt zu werden, die mindestens einen Teil der ersten Daten umfassen.

13. Drahtlose Vorrichtung (130) nach Anspruch 12, wobei der Puffer der drahtlosen Vorrichtung (130) konfiguriert ist, ein zweiter Puffer zu sein, der von einem ersten Puffer verbleibt, den die drahtlose Vorrichtung (130) vor Senden einer initialen Übertragung zweiter Daten an den Netzwerkknoten (110) in dem inaktiven Zustand aufgewiesen hat, wobei der erste Puffer konfiguriert ist, eine erste Größe aufgewiesen zu haben, die größer als der Schwellenwert ist.

14. Drahtlose Vorrichtung (130) nach einem der Ansprüche 12-13, wobei der Schwellenwert in der drahtlosen Vorrichtung (130) vorkonfiguriert ist.

15. Drahtlose Vorrichtung (130) nach einem der Ansprüche 12-13, wobei die Angabe konfiguriert ist, eine zweite Angabe zu sein, und wobei die drahtlose Vorrichtung (130) weiter konfiguriert ist zum:

- Erhalten einer ersten Angabe von dem Netzwerkknoten (110), wobei die erste Angabe konfiguriert ist, den Schwellenwert anzugeben.

16. Drahtlose Vorrichtung (130) nach einem der Ansprüche 12-15, wobei die drahtlose Vorrichtung (130) weiter konfiguriert ist zum:

- Erhalten eines Satzes von Übereinstimmungen zwischen dem Satz von Werten und einem Satz von Puffergrößen, wobei der Satz von Übereinstimmungen konfiguriert ist, auf dem Schwellenwert zu basieren.

17. Drahtlose Vorrichtung (130) nach Anspruch 16, wobei das Erhalten des Satzes von Übereinstimmungen konfiguriert ist, auf mindestens einer der folgenden Formeln zu basieren, wobei der Schwellenwert konfiguriert ist, eine maximale Größe des Puffers ($BS_{max}$) zu sein:

i. eine Schrittgröße des Satzes von Übereinstimmungen ist konfiguriert, als eines der Folgenden erhalten zu werden:

a. $\Delta = BS_{max}/n$, wobei n konfiguriert ist, eine Anzahl von Übereinstimmungen oder die Anzahl von Übereinstimmungen minus eins oder zwei zu sein, und
b. $\Delta_i = s \times BS_i$, wobei s konfiguriert ist, ein Bruchteil eines vorigen Schwellenwerts in dem Satz von Puffergrößen zu sein, und

c. $\Delta_i = s \times BS_i$, wobei $s = \sqrt[n]{\dfrac{BS_{max}}{BS_1}} - 1$ ist, und

ii. jede Puffergröße in dem Satz von Puffergrößen ist konfiguriert, als eines der Folgenden erhalten zu werden:

a.

$$BS_i = \Delta * i,$$

b.

$$BS_i = BS_1(1+s)^{i-1}$$

c.

$$BS_i = round(\sqrt[n]{10^i}),$$

d. $BS_1 = \beta + \alpha \times BS_{max}$, wobei $\alpha$ konfiguriert ist, ein Bruchteil von $BS_{max}$ zu sein, und $\beta$ konfiguriert ist, eine Konstante zu sein, und
e. eine weitere Funktion des $BS_{max}$.

18. Drahtlose Vorrichtung (130) nach Anspruch 17, wobei der Satz von Übereinstimmungen, der konfiguriert ist erhalten zu werden, konfiguriert ist, duplizierte Werte zu umfassen, und wobei das Erhalten des Satzes von Übereinstimmungen weiter konfiguriert ist, Bestimmen einer ersten Puffergröße (BS$_1$) des Satzes von Puffergrößen und dann mindestens eines der Folgenden zu umfassen:

- Auswählen des Bruchteils s, so dass s*BS$_1$>=1, und
- Verschieben jeglicher Duplikate basierend auf einem bestimmten Wert.

19. Drahtlose Vorrichtung (130) nach Anspruch 15 und einem der Ansprüche 16-18, wobei die erste Angabe, die konfiguriert ist erhalten zu werden, konfiguriert ist, einen Teilsatz der Werte zu umfassen, der konfiguriert ist, in dem Satz von Übereinstimmungen umfasst zu sein, und wobei das Erhalten des Satzes von Übereinstimmungen konfiguriert ist, in jedem Intervall durchgeführt zu werden, das konfiguriert ist, von dem Teilsatz von Werten definiert zu werden, der konfiguriert ist erhalten zu werden.

20. Drahtlose Vorrichtung (130) nach einem der Ansprüche 15-19, wobei mindestens eines der Folgenden zutrifft:

- der Satz von Puffergrößen ist konfiguriert, eine Puffergröße gleich null auszulassen, und
- der Satz von Puffergrößen ist konfiguriert, sich nach einem Satz von Transportblockgrößen auszurichten, der dazu konfiguriert ist, von der drahtlosen Vorrichtung (130) verwendet zu werden.

21. Drahtlose Vorrichtung (130) nach einem der Ansprüche 12-20, wobei die Angabe konfiguriert ist, eine zweite Angabe zu sein, und wobei die zweite Angabe konfiguriert ist, ein Medienzugangssteuerungs-Steuerelement, MAC CE, zu sein.

22. Drahtlose Vorrichtung (130) nach den Ansprüchen 12-21, wobei die Angabe konfiguriert ist, eine zweite Angabe zu sein, und wobei die zweite Angabe weiter konfiguriert ist, eines der Folgenden zu umfassen:

- eine dritte Angabe, die konfiguriert ist, eine Menge an Daten anzugeben, die die drahtlose Vorrichtung (130) erwartet, mit dem Netzwerkknoten (110) innerhalb eines zukünftigen Zeitperiode auszutauschen, und
- eine vierte Angabe, die konfiguriert ist, eine logische Kanalgruppenkennung, LCGID, anzugeben, für die die zweite Angabe angemeldet ist.

**Revendications**

1. Procédé exécuté par un dispositif sans fil (130), le procédé étant destiné à gérer la transmission de données vers un noeud de réseau (110), le dispositif sans fil (130) et le noeud de réseau (110) fonctionnant dans le réseau de communications sans fil (100), le procédé comprenant de :

- envoyer (203) une indication au noeud de réseau (110), l'indication comprenant une valeur sélectionnée parmi un ensemble de valeurs, la valeur sélectionnée correspondant à une taille d'une mémoire tampon du dispositif sans fil (130) détectée ou attendue pendant un état inactif au moment d'une ou plusieurs transmissions, dans lequel l'envoi (203) de l'indication est effectué à condition que la taille de la mémoire tampon soit inférieure à un seuil,
- recevoir (204) une autorisation de liaison montante du noeud de réseau (110), sur la base de l'indication envoyée, et
- envoyer (205) des premières données au noeud de réseau (110) pendant l'état inactif du dispositif sans fil (130), dans lequel les premières données sont des données de plan d'utilisateur, dans lequel l'envoi (205) des premières données est effectué conformément à l'autorisation de liaison montante reçue du noeud de réseau (110), et dans lequel l'envoi (205) des premières données est effectué à condition que la taille de la mémoire tampon du dispositif sans fil (130) soit inférieure au seuil, la mémoire tampon étant une mémoire tampon pour la transmission, dans lequel l'envoi (203) de l'indication est effectué avant l'envoi (205) d'un ou plusieurs paquets de données comprenant au moins une partie des premières données.

2. Procédé selon la revendication 1, dans lequel la mémoire tampon du dispositif sans fil (130) est une deuxième mémoire tampon restante d'une première mémoire tampon que le dispositif sans fil (130) possédait avant d'envoyer une transmission initiale de deuxièmes données au noeud de réseau (110) à l'état inactif, la première mémoire tampon ayant eu une première taille supérieure au seuil.

3. Procédé selon une quelconque des revendications 1-2, dans lequel le seuil est préconfiguré dans le dispositif sans fil (130).

4. Procédé selon une quelconque des revendications 1 à 2, dans lequel l'indication est une deuxième indication, et dans lequel le procédé comprend en outre de :

- obtenir (201) une première indication provenant du noeud de réseau (110), la première indication indiquant le seuil.

5. Procédé selon une quelconque des revendications 1 à 4, dans lequel le procédé comprend en outre de :

- obtenir (202) un ensemble de correspondances entre l'ensemble de valeurs et un ensemble de tailles de mémoire tampon, l'ensemble de correspondances étant basé sur le seuil.

6. Procédé selon la revendication 5, dans lequel l'obtention (202) de l'ensemble de correspondances est basée sur au moins une des formules suivantes, dans laquelle le seuil est une taille maximale de la mémoire tampon ($BS_{max}$) :

i. une taille de pas de l'ensemble des correspondances est obtenue comme une des valeurs suivantes :

a. $\Delta = BS_{max}/n$, dans lequel n est un nombre de correspondances ou le nombre de correspondances moins un ou deux, et
b. $\Delta_i = s \times BS_i$, dans lequel s est une fraction d'une valeur seuil précédente dans l'ensemble des tailles de mémoire tampon, et

c. $\Delta_i = s \times BS_i$, dans lequel $s = \sqrt[n]{\dfrac{BS_{max}}{BS_1}} - 1$ et

ii. chaque taille de mémoire tampon dans l'ensemble des tailles de mémoire tampon est obtenue comme une des valeurs suivantes :

a.

$$BS_i = \Delta * i,$$

b.

$$BS_i = BS_1(1+s)^{i-1}$$

c.

$$BS_i = round(\sqrt[n]{10^i}),$$

d. $BS_1 = \beta + \alpha \times BS_{max}$, dans lequel $\alpha$ est une fraction de $BS_{max}$ et $\beta$ est une constante, et
e. une autre fonction du $BS_{max}$.

7. Procédé selon la revendication 6, dans lequel l'ensemble de correspondances obtenu comprend des valeurs dupliquées, et dans lequel l'obtention (202) de l'ensemble de correspondances comprend en outre la détermination d'une première taille de mémoire tampon (BSI) de l'ensemble de tailles de mémoire tampon, puis au moins un de :

- sélectionner la fraction s telle que $s*BS_1 >= 1$, et
- décaler un des doublons en fonction d'une valeur déterminée.

8. Procédé selon la revendication 4 et une quelconque des revendications 5-7, dans lequel la première indication obtenue comprend un sous-ensemble des valeurs à inclure dans l'ensemble de correspondances, et dans lequel l'obtention (202) de l'ensemble de correspondances est effectuée dans chaque intervalle défini par le sous-ensemble de valeurs obtenu.

9. Procédé selon une quelconque des revendications 5-8, dans lequel au moins un des éléments suivants :

   - l'ensemble de tailles de mémoire tampon omet une taille de mémoire tampon égale à zéro, et
   - l'ensemble de tailles de mémoire tampon s'aligne sur un ensemble de tailles de blocs de transport configuré pour être utilisé par le dispositif sans fil (130).

10. Procédé selon une quelconque des revendications 1-9, dans lequel l'indication est une deuxième indication, et dans lequel la deuxième indication est un élément de contrôle de commande d'accès au support, MAC CE.

11. Procédé selon les revendications 1 à 10, dans lequel l'indication est une deuxième indication, et dans lequel la deuxième indication comprend en outre un des éléments suivants :

   - une troisième indication indiquant une quantité de données que le dispositif sans fil (130) s'attend à échanger avec le noeud de réseau (110) dans une période de temps future, et
   - une quatrième indication indiquant un identifiant de groupe de canaux logiques, LCGID, pour lequel la deuxième indication est signalée.

12. Dispositif sans fil (130), pour gérer la transmission de données vers un noeud de réseau (110), le dispositif sans fil (130) et le noeud de réseau (110) étant configurés pour fonctionner dans un réseau de communications sans fil (100), le dispositif sans fil (130) étant en outre configuré pour :

   - envoyer une indication au noeud de réseau (110), l'indication étant configurée pour comprendre une valeur configurée pour être sélectionnée parmi un ensemble de valeurs, la valeur sélectionnée étant configurée pour correspondre à une taille d'une mémoire tampon du dispositif sans fil (130) configurée pour être détectée ou attendue pendant un état inactif à un moment d'une ou plusieurs transmissions, dans lequel l'envoi de l'indication est configuré pour être effectué à condition que la taille de la mémoire tampon soit inférieure à un seuil,
   - recevoir une autorisation de liaison montante du noeud de réseau (110), sur la base de l'indication configurée pour être envoyée, et
   - envoyer des premières données au noeud de réseau (110) pendant l'état inactif du dispositif sans fil (130), dans lequel les premières données sont configurées pour être des données de plan d'utilisateur, dans lequel l'envoi des premières données est configuré pour être effectué selon l'autorisation de liaison montante configurée pour être reçue du noeud de réseau (110), et dans lequel l'envoi des premières données est configuré pour être effectué à condition que la taille de la mémoire tampon du dispositif sans fil (130) soit inférieure au seuil, la mémoire tampon étant configurée pour être une mémoire tampon pour la transmission, dans lequel l'envoi de l'indication est configuré pour être effectué avant l'envoi d'un ou plusieurs paquets de données comprenant au moins une partie des premières données.

13. Dispositif sans fil (130) selon la revendication 12, dans lequel la mémoire tampon du dispositif sans fil (130) est configurée pour être un deuxième mémoire tampon restante d'une première mémoire tampon que le dispositif sans fil (130) avait avant d'envoyer une transmission initiale de deuxièmes données au noeud de réseau (110) dans l'état inactif, la première mémoire tampon étant configurée pour avoir une première taille supérieure au seuil.

14. Dispositif sans fil (130) selon une quelconque des revendications 12-13, dans lequel le seuil est préconfiguré dans le dispositif sans fil (130).

15. Dispositif sans fil (130) selon une quelconque des revendications 12-13, dans lequel l'indication est configurée pour être une deuxième indication, et dans lequel le dispositif sans fil (130) est en outre configuré pour :

   - obtenir une première indication du noeud de réseau (110), la première indication étant configurée pour indiquer le seuil.

16. Dispositif sans fil (130) selon une quelconque des revendications 12-15, dans lequel le dispositif sans fil (130) est en outre configuré pour :

   - obtenir un ensemble de correspondances entre l'ensemble de valeurs et un ensemble de tailles de mémoire tampon, l'ensemble des correspondances étant configuré pour être basé sur le seuil.

17. Dispositif sans fil (130) selon la revendication 16, dans lequel l'obtention de l'ensemble de correspondances est configurée pour être basée sur au moins une des formules suivantes, dans lequel le seuil est configuré pour être une taille maximale de la mémoire tampon ($BS_{max}$):

i. une taille de pas de l'ensemble des correspondances est obtenue comme une des valeurs suivantes :

a. $\Delta = BS_{max}/n$, dans lequel n est un nombre de correspondances ou le nombre de correspondances moins un ou deux, et
b. $\Delta_i = s \times BS_i$, dans lequel s est une fraction d'une valeur seuil précédente dans l'ensemble des tailles de mémoire tampon, et

c. $\Delta_i = s \times BS_i$, dans lequel $s = \sqrt[n]{\dfrac{BS_{max}}{BS_1}} - 1$ et

ii. chaque taille de mémoire tampon dans l'ensemble des tailles de mémoire tampon est obtenue comme une des valeurs suivantes :

a.

$$BS_i = \Delta * i,$$

b.

$$BS_i = BS_1(1+s)^{i-1}$$

c.

$$BS_i = round(\sqrt[n]{10^i}),$$

d. $BS_1 = \beta + \alpha \times BS_{max}$, dans lequel $\alpha$ est une fraction de $BS_{max}$ et $\beta$ est une constante, et
e. une autre fonction du $BS_{max}$.

18. Dispositif sans fil (130) selon la revendication 17, dans lequel l'ensemble de correspondances configuré pour être obtenu est configuré pour comprendre des valeurs dupliquées, et dans lequel l'obtention de l'ensemble de correspondances est en outre configurée pour comprendre la détermination d'une première taille de mémoire tampon ($BS_1$) de l'ensemble des tailles de mémoire tampon, puis au moins un des éléments suivants :

- sélectionner la fraction s telle que $s*BS_1 >= 1$, et
- décaler un des doublons en fonction d'une valeur déterminée.

19. Dispositif sans fil (130) selon la revendication 15 et une quelconque des revendications 16-18, dans lequel la première indication configurée pour être obtenue est configurée pour comprendre un sous-ensemble des valeurs à configurer pour être incluses dans l'ensemble de correspondances, et dans lequel l'obtention de l'ensemble de correspondances est configurée pour être effectuée dans chaque intervalle configuré pour être défini par le sous-ensemble de valeurs configuré pour être obtenu.

20. Dispositif sans fil (130) selon une quelconque des revendications 15 à 19, dans lequel au moins un des éléments suivants :

- l'ensemble de tailles de mémoire tampon est configuré pour omettre une taille de mémoire tampon égale à zéro, et
- l'ensemble de tailles de mémoire tampon est configuré pour s'aligner sur un ensemble de tailles de blocs de transport configurés pour être utilisés par le dispositif sans fil (130).

**21.** Dispositif sans fil (130) selon une quelconque des revendications 12 à 20, dans lequel l'indication est configurée pour être une deuxième indication, et dans lequel la deuxième indication est configurée pour être un élément de commande de contrôle d'accès au support, MAC CE.

**22.** Dispositif sans fil (130) selon les revendications 12 à 21, dans lequel l'indication est configurée pour être une deuxième indication, et dans lequel la deuxième indication est en outre configurée pour comprendre un des éléments suivants :

- une troisième indication indiquant une quantité de données que le dispositif sans fil (130) s'attend à échanger avec le noeud de réseau (110) dans une période de temps future, et
- une quatrième indication indiquant un identifiant de groupe de canaux logiques, LCGID, pour lequel la deuxième indication est signalée.

a)

b)

**Figure 1**

**Figure 2**

**Figure 3**

| LCG ID | Buffer Size | Oct 1 |
|--------|-------------|-------|

# Figure 4

| R | R | LCID | Oct 1 |
|---|---|------|-------|

# Figure 5

| R | F | LCID | Oct 1 |
|---|---|------|-------|
| eLCID | | | Oct 2 |

# Figure 6

**a)**

Wireless device <u>130</u>

<u>701</u>. Sending unit

<u>702</u>. Receiving unit

<u>703</u>. Obtaining  unit

<u>704</u>. Other units

<u>705</u>. Processor

<u>707</u>. Receiving port

<u>706</u>. Memory

<u>708</u>. Sending port

<u>710</u>  COMPUTER-READABLE MEDIUM  ◄--- PROGRAM  <u>709</u>

**b)**

Wireless device <u>130</u>

<u>707</u>. Receiving port

<u>711</u>. Radio circuitry

<u>705</u>. Processing circuitry

<u>706</u>. Memory

<u>706</u>. Sending port

<u>710</u>  COMPUTER-READABLE MEDIUM  ◄--- PROGRAM  <u>709</u>

# Figure 7

**a)**

Network node <u>110</u>

┌─────────────────────────────┐
┊ <u>801</u>. Receiving unit ┊
└─────────────────────────────┘
┌─────────────────────────────┐
┊ <u>802</u>. Sending unit ┊
└─────────────────────────────┘
┌─────────────────────────────┐
┊ <u>803</u>. Obtaining unit ┊
└─────────────────────────────┘
┌─────────────────────────────┐
┊ <u>804</u>. Other units ┊
└─────────────────────────────┘

<u>805</u>. Processor

<u>807</u>. Receiving port

<u>806</u>. Memory

<u>808</u>. Sending port

<u>810</u> ⎯ COMPUTER-READABLE MEDIUM ◄--- PROGRAM ⎯ <u>809</u>

**b)**

Network node <u>110</u>

<u>811</u>. Radio circuitry

<u>805</u>. Processing circuitry

<u>807</u>. Receiving port

<u>806</u>. Memory

<u>808</u>. Sending port

<u>810</u> ⎯ COMPUTER-READABLE MEDIUM ◄--- PROGRAM ⎯ <u>809</u>

# Figure 8

**FIG. 9**

FIG. 10

BEGIN

*1110*
Host computer
provides user
data

←→

*1111*
Host computer
executes host
application

*1120*
Host computer
initiates
transmission
carrying the
user data to
the UE

*1130*
Base station
transmits the
user data

*1140*
UE executes
client
application

END

**FIG. 11**

BEGIN

*1210*
Host computer
provides user
data

*1220*
Host computer
initiates
transmission
carrying the
user data to
the UE

*1230*
UE receives
the user data

END

**FIG. 12**

BEGIN

**1310**
UE receives input data provided at host computer

**1311**
UE executes client application

**1320**
UE provides user data

**1321**
UE executes client application

**1330**
UE initiates transmission of the user data to the host computer

**1340**
Host computer receives user data transmitted from the UE

END

# FIG. 13

BEGIN

**1410**
Base station receives user data from UE

**1420**
Base station initiates transmission of user data to the host computer

**1430**
Host computer receives the user data

END

# FIG. 14